# EUROPÄISCHE PATENTSCHRIFT

(11) **EP 1 662 596 B1**
(45) Veröffentlichungstag und Bekanntmachung des Hinweises auf die Patenterteilung: **17.08.2016**
(21) Anmeldenummer: 05021224.0
(22) Anmeldetag: 29.09.2005
(51) Int. Cl.: H01M 8/12, H01M 8/0282, H01M 8/0271, H01M 8/0286, H01M 8/0297, H01M 8/24, H01M 8/242

(54) **Dichtungsanordnung für einen Hochtemperatur Brennstoffzellenstapel und Verfahren zum Herstellen dieses Brennstoffzellenstapels**
Seal arrangement for a high temperature fuel cell stack and process to manufacture such a stack
Ensemble d'étanchéité pour une empilement de piles à combustilble à haute temperature et procédé d'assemblage de cette empilement

(30) Priorität: 30.09.2004 DE 102004047539
(43) Veröffentlichungstag der Anmeldung: 31.05.2006
(73) Patentinhaber: ElringKlinger AG, 72581 Dettingen (DE); Bayerische Motoren Werke Aktiengesellschaft, 80809 München (DE)
(72) Erfinder: Zerfaß, Hans-Rainer, Dr., 65232 Taunusstein (DE); Diez, Armin, 73252 Lenningen (DE); Schenk, Peter, 72531 Hohenstein (DE); Fritz, Wolfgang, 72555 Metzingen (DE); Lamp, Peter, Dr., 86916 Kaufering (DE); Wier, Manfred, Dr., 80992 München (DE); Tachtler, Joachim, 85737 Ismaning (DE)
(74) Vertreter: Hoeger, Stellrecht & Partner Patentanwälte mbB

(56) Entgegenhaltungen:
- WO-A-02/17416
- WO-A-03/081693
- WO-A-2004/010523
- DE-A1- 10 122 327
- DE-A1- 10 125 776
- DE-A1- 10 125 777
- DE-A1- 10 302 122
- US-A- 4 997 726
- US-B1- 6 656 625

## Beschreibung

Die vorliegende Erfindung betrifft eine Dichtungsanordnung für einen Brennstoffzellenstapel, der mehrere Brennstoffzelleneinheiten umfasst, welche längs einer Stapelrichtung aufeinanderfolgen, wobei jede der Brennstoffzelleneinheiten ein Gehäuse mit mindestens einem Gehäuseteil aus einem metallischen Material umfasst.

Zur Einstellung der gewünschten Betriebsspannung werden Brennstoffzelleneinheiten in der benötigten Anzahl aufeinander angeordnet, um so einen Brennstoffzellenstapel (Brennstoffzellenstack) zu erhalten. Um einen elektrischen Kurzschluss zu verhindern, müssen die Gehäuse von in dem Brennstoffzellenstapel aufeinanderfolgenden Brennstoffzelleneinheiten elektrisch voneinander isoliert werden. Außerdem ist es erforderlich, die Brenngaskanäle des Brennstoffzellenstapels gasdicht von den Oxidationsmittelräumen der Brennstoffzelleneinheiten und die Oxidationsmittelkanäle des Brennstoffzellenstapels gasdicht von den Brenngasräumen der Brennstoffzelleneinheiten zu trennen.

Bei bekannten Brennstoffzellenstapeln werden Dicht- und Isolationselemente aus Glaslot oder aus keramischen Dichtmaterialien verwendet, um die erforderliche elektrische Isolationswirkung und die erforderliche Abdichtwirkung zu erzielen.

Bei einigen der üblicherweise verwendeten Dichtungsmaterialien ist der elektrische Widerstand bei der Betriebstemperatur einer Hochtemperatur-Brennstoffzelleneinheit (im Bereich von ungefähr 800 °C bis ungefähr 900 °C) nicht mehr ausreichend hoch, um eine zufriedenstellende Isolationswirkung zu erzielen. Ferner weisen einige der üblicherweise verwendeten Dichtungsmaterialien nur eine geringe Beständigkeit gegenüber den bei einer Hochtemperatur-Brennstoffzelleneinheit häufig auftretenden Temperaturwechseln (zwischen Betriebs- und Ruhephasen) auf.

Die DE 101 25 776 A1 offenbart eine Dichtungsanordnung für einen Brennstoffzellenstapel, der mehrere Brennstoffzelleneinheiten umfasst, welche längs einer Stapelrichtung aufeinanderfolgen, wobei jede der Brennstoffzelleneinheiten ein Gehäuse mit einem Gehäuseoberteil und einem Gehäuseunterteil aus einem metallischen Material umfasst. Das Gehäuseoberteil und/oder das Gehäuseunterteil können mit einer Keramikbeschichtung versehen sein, und zwischen dem Gehäuseunterteil einer ersten Brennstoffzelleneinheit und dem Gehäuseoberteil einer zweiten Brennstoffzelleneinheit ist ein Material, das bei der Betriebstemperatur der Dichtung zumindest bereichsweise flüssig ist, angeordnet.

Die DE 103 02 122 A1 offenbart eine Dichtungsanordnung für einen Brennstoffzellenstapel, die eine elektronisch isolierende Dünnschichtkeramik und eine Schicht aus einem Glaskeramiklot oder einem Alkalisilikat-haltigen Hochtemperaturkeramikklebstoff umfasst.

Die US-B1-6 656 625 offenbart eine Dichtungsanordnung für einen Brennstoffzellenstapel, die eine Schicht aus Glaskeramik-Isoliermaterial und eine Abdichtschicht aus Glas oder aus einer Mischung von Glas und Glaskeramik umfasst.

Die WO 02/17416 A offenbart eine Dichtungsanordnung für einen Brennstoffzellenstapel, die eine Schicht mit einer Matrix aus Keramikfasern und festen Partikeln, die zwischen den Keramikfasern verteilt sind, umfasst.

Die WO 03/081693 A offenbart einen Brennstoffzellenstapel, der aus Brennstoffzellenpaketen zusammengesetzt ist, welche jeweils einen Rahmen und an dem Rahmen gehaltene sogenannte Multi-Zellen-Folien umfassen. Zwischen aufeinanderfolgenden Rahmenteilen solcher Brennstoffzellenpakete können metallische Zwischenelemente angeordnet sein, die mit einem anderen Metall, wie beispielsweise Nickel oder Gold, beschichtet sein können, um eine gasdichte Abdichtung zu ergeben.

Die DE 101 25 777 A1 offenbart eine Dichtungsanordnung für einen Brennstoffzellenstapel, welche ein ringförmiges Dichtelement aus einem keramischen Material umfasst.

Die US-A-4 997 726 offenbart eine Dichtungsanordnung für einen Brennstoffzellenstapel, die eine bei der Betriebstemperatur des Brennstoffzellenstapels elektrisch nicht leitende, hochviskose Schmelze, beispielsweise aus Borsilikatglas, umfasst.

Die WO 2004/010523 A offenbart eine Dichtungsanordnung für einen Brennstoffzellenstapel, die ein Dichtelement umfasst, welches eine keramische Komponente und eine in ein keramisches Material umgewandelte reaktive Komponente umfasst.

Die DE 101 22 327 A1 offenbart eine Dichtungsanordnung für einen Brennstoffzellenstapel, welche aus Glaslot gebildet ist.

Die EP 1 629 936 A1, deren Inhalt in der ursprünglich eingereichten Fassung lediglich gemäß Art. 54(3) EPÜ bei der Prüfung auf Neuheit zu berücksichtigen ist, offenbart den Einsatz eines metallischen Lotes in einer Feststoffelektrolyt-Brennstoffzelle (SOFC), wobei das Lot während des Betriebes der Brennstoffzelle fest ist.

Der vorliegenden Erfindung liegt die Aufgabe zugrunde, eine Dichtungsanordnung für einen Brennstoffzellenstapel der eingangs genannten Art zu schaffen, welche auch bei einer hohen Betriebstemperatur des Brennstoffzellenstapels eine ausreichende elektrische Isolationswirkung und eine ausreichende mechanische Festigkeit aufweist, wobei ferner in einfacher Weise eine haltbare Verbindung zwischen den Gehäusen von in der Stapelrichtung aufeinanderfolgenden Brennstoffzelleneinheiten geschaffen wird, so dass der Aufbau des Brennstoffzellenstapels durch sukzessives Aneinanderfügen der Brennstoffzelleneinheiten besonders einfach und rasch erfolgen kann.

Diese Aufgabe wird durch eine Dichtungsanordnung nach Anspruch 1 gelöst.

Die Keramikbeschichtung ist aus einem keramischen Material gebildet, das bei der Betriebstemperatur des Brennstoffzellenstapels eine elektrische

Isolationswirkung aufweist, so dass die elektrische Isolation von in dem Brennstoffzellenstapel aufeinanderfolgenden Brennstoffzelleneinheiten durch diese Keramikbeschichtung gewährleistet ist.

Da die elektrische Isolierung bereits durch die Keramikbeschichtung des Zwischenelements erreicht wird, kann für die mechanische Verbindung der Gehäuse aufeinanderfolgender Brennstoffzelleneinheiten und für die Abdichtung der Fluidkanäle statt eines Glaslotes oder eines keramischen Dichtmaterials ein metallisches Lot verwendet werden, welches eine hohe Temperaturbeständigkeit und eine hohe Temperaturwechselbeanspruchbarkeit aufweist.

Außerdem erlaubt es das erfindungsgemäße Konzept, mittels des Zwischenelements in einfacher Weise eine haltbare Verbindung zwischen den Gehäusen von in der Stapelrichtung aufeinanderfolgenden Brennstoffzelleneinheiten zu schaffen, so dass der Aufbau des Brennstoffzellenstapels durch sukzessives Aneinanderfügen der Brennstoffzelleneinheiten besonders einfach und rasch erfolgen kann.

Alternativ oder ergänzend zu einer Keramikbeschichtung an dem Zwischenelement kann auch vorgesehen sein, dass das Gehäuseteil der ersten Brennstoffzelleneinheit, mit welchem das Zwischenelement verlötet ist, mit einer solchen Keramikbeschichtung versehen ist.

Das metallische Lot ist bei der Betriebstemperatur des Brennstoffzellenstapels fest.

Das Gehäuseteil der ersten Brennstoffzelleneinheit ist aus einem metallischen Material gebildet und gegebenenfalls mit der Keramikbeschichtung versehen.

Auch das Gehäuseteil der zweiten Brennstoffzelleneinheit ist aus einem metallischen Material gebildet.

Das Gehäuse jeder Brennstoffzelleneinheit umfasst ein Gehäuseunterteil, ein Gehäuseoberteil und ein Zwischenelement, das an dem Gehäuseunterteil oder an dem Gehäuseoberteil festgelegt ist.

Die mindestens eine Stelle, an welcher das Zwischenelement an einem Gehäuseteil einer zweiten Brennstoffzelleneinheit festgelegt ist, ist vorzugsweise eine nicht mit der Keramikbeschichtung versehene Stelle.

Eine besonders haltbare und rasch und einfach herstellbare Verbindung zwischen den Brennstoffzelleneinheiten wird erzielt, wenn das Zwischenelement mit dem Gehäuseteil der zweiten Brennstoffzelleneinheit verschweißt und/oder verlötet ist.

Bei einer bevorzugten Ausgestaltung der Erfindung ist vorgesehen, dass das Zwischenelement einen Rahmenteil umfasst, der sich ringförmig um Fluidkanäle, welche den Brennstoffzellenstapel längs der Stapelrichtung durchsetzen, herum erstreckt.

Ferner kann vorgesehen sein, dass das Zwischenelement mindestens einen Kanalbegrenzungsteil umfasst, der mit dem Rahmenteil verbunden ist und alleine oder zusammen mit dem Rahmenteil einen der den Brennstoffzellenstapel durchsetzenden Fluidkanäle umschließt.

Vorzugsweise ist vorgesehen, dass das Zwischenelement für jeden Brenngaszuführkanal und jeden Brenngasabführkanal des Brennstoffzellenstapels jeweils einen den betreffenden Kanal zugeordneten Kanalbegrenzungsteil umfasst.

Alternativ oder ergänzend hierzu kann vorgesehen sein, dass das Zwischenelement für jeden Oxidationsmittelzuführkanal und jeden Oxidationsmittelabführkanal des Brennstoffzellenstapels jeweils einen Kanalbegrenzungsteil umfasst.

Die Herstellung des Zwischenelements gestaltet sich besonders einfach, wenn das Zwischenelement aus einem Metallblech gebildet ist.

Vorzugsweise ist vorgesehen, dass das Zwischenelement aus einem hochkorrosionsfesten Stahl gebildet ist, beispielsweise aus Crofer 22 APU. Dadurch wird eine ausreichende Korrosionsbeständigkeit des Zwischenelements auch bei der hohen Betriebstemperatur einer SOFC (Solid Oxide Fuel Cell)-Brennstoffzelleneinheit erzielt.

Besonders günstig ist es, wenn als Material für das Zwischenelement der korrosionsbeständige Stahl verwendet wird, der unter dem Handelsnamen "Aluchrom Y" oder auch "FeCrAlY" kommerziell erhältlich ist.

Grundsätzlich kann die Keramikbeschichtung des Zwischenelements bzw. des Gehäuseteils der ersten Brennstoffzelleneinheit aus jedem keramischen Material gebildet werden, welches bei der Betriebstemperatur des Brennstoffzellenstapels einen ausreichend hohen spezifischen elektrischen Widerstand aufweist.

Besonders geeignet sind solche Keramikbeschichtungen, welche Aluminiumoxid und/oder Titandioxid und/oder Zirkoniumdioxid und/oder Magnesiumoxid umfassen.

Die Keramikbeschichtung des Zwischenelements bzw. des Gehäuseteils der ersten Brennstoffzelleneinheit kann durch thermisches Spritzen, insbesondere durch atmosphärisches Plasmaspritzen, durch Vakuumplasmaspritzen oder durch Flammspritzen, an dem Zwischenelement erzeugt sein. Auch andere Verfahren, wie beispielsweise das Sol-Gel-Verfahren, sind zur Herstellung der Keramikbeschichtung einsetzbar.

Bei einer besonderen Ausgestaltung der erfindungsgemäßen Dichtungsanordnung ist vorgesehen, dass das Zwischenelement und/oder das Gehäuseteil der ersten Brennstoffzelleneinheit aus einer metallischen Legierung gebildet ist, welche einen oxidierbaren Bestandteil enthält.

Insbesondere kann vorgesehen sein, dass die metallische Legierung Aluminium und/oder Zirkonium als oxidierbaren Bestandteil enthält.

Bei Vorhandensein eines oxidierbaren Bestandteils in der metallischen Legierung, aus der das Zwischenelement bzw. das Gehäuseteil der ersten Brennstoffzelleneinheit gebildet ist, kann die Keramikbeschichtung des Zwischenelements bzw. des Gehäuseteils durch Oxidation des oxidierbaren Bestandteils, beispielsweise Aluminium und/oder Zirkonium, der metallischen Legierung erzeugt sein.

Vorzugsweise weist die Keramikbeschichtung des Zwischenelements bzw. des Gehäuseteils der ersten Brennstoffzelleneinheit eine Dicke von ungefähr 20 µm bis ungefähr 1000 µm auf.

Für die Verlötung des Zwischenelements mit dem Gehäuseteil der ersten Brennstoffzelleneinheit kann insbesondere ein Silberbasislot verwendet werden.

Ein solches Silberbasislot kann mit oder ohne Zusatz von Kupfer verwendet werden.

Wenn das Silberbasislot ohne Kupferzusatz verwendet wird, so ist es günstig, wenn das Silberbasislot einen Zusatz von Kupferoxid enthält, da durch den Zusatz von Kupferoxid das Silberbasislot Keramikoberflächen besser benetzt.

Ferner kann das Silberbasislot einen Titanzusatz zur Verbesserung der Benetzung umfassen.

Ebenso vorteilhaft können Aktivlote, beispielsweise auf Kupferbasis, eingesetzt werden.

Das für die Verlötung des Zwischenelements mit dem Gehäuseteil der ersten Brennstoffzelleneinheit verwendete Lot wird aus einem innigen Gemenge der Komponenten hergestellt, aus welchem sich erst bei der Erwärmung auf die Löttemperatur in situ die Lotlegierung bildet.

Die mindestens eine Stelle, an welcher das Gehäuseteil der ersten Brennstoffzelleneinheit mit dem Zwischenelement verlötet ist, kann ebenfalls mit einer elektrisch isolierenden Keramikbeschichtung versehen sein. Da die elektrische Isolation zwischen den Gehäusen der aufeinanderfolgenden Brennstoffzelleneinheiten jedoch bereits durch die Keramikbeschichtung des Zwischenelements gewährleistet ist, ist eine solche Keramikbeschichtung des Gehäuseteils der ersten Brennstoffzelleneinheit nicht zwingend erforderlich.

Das Zwischenelement der Dichtungsanordnung kann beispielsweise nur auf der dem Gehäuseteil der ersten Brennstoffzelleneinheit zugewandten Seite mit einer Keramikbeschichtung versehen sein.

Alternativ hierzu kann jedoch auch vorgesehen sein, dass das Zwischenelement sowohl auf einer dem Gehäuseteil der ersten Brennstoffzelleneinheit zugewandten Seite als auch auf einer dem Gehäuseteil der zweiten Brennstoffzelleneinheit zugewandten Seite mit einer Keramikbeschichtung versehen ist. Durch das Vorsehen zweier Keramikbeschichtungen auf den den abzudichtenden Gehäuseteilen jeweils zugewandten Seiten des Zwischenelements wird eine besonders gute elektrische Isolationswirkung der erfindungsgemäßen Dichtungsanordnung erzielt.

Die Keramikbeschichtung auf der dem Gehäuseteil der zweiten Brennstoffzelleneinheit zugewandten Seite kann dabei hinsichtlich des verwendeten Materials und/oder der verwendeten Schichtdicke mit der Keramikbeschichtung auf der dem Gehäuseteil der ersten Brennstoffzelleneinheit zugewandten Seite des Zwischenelements übereinstimmen oder sich hiervon unterscheiden.

Bei einer besonderen Ausgestaltung der erfindungsgemäßen Dichtungsanordnung ist ferner vorgesehen, dass das Zwischenelement an mindestens einer mit einer Keramikbeschichtung versehenen Stelle mittels eines metallischen Lotes mit dem Gehäuseteil der zweiten Brennstoffzelleneinheit verlötet ist.

Das Zwischenelement der erfindungsgemäßen Dichtungsanordnung kann einteilig ausgebildet sein.

Alternativ hierzu kann jedoch auch vorgesehen sein, dass das Zwischenelement mindestens zwei separate Teil-Zwischenelemente umfasst, welche miteinander verbunden sind.

Die mindestens zwei separaten Teil-Zwischenelemente können insbesondere miteinander verschweißt und/oder verlötet sein.

Vorzugsweise ist vorgesehen, dass mindestens zwei separate Teil-Zwischenelemente in der Stapelrichtung des Brennstoffzellenstapels aufeinandergestapelt sind.

Insbesondere kann vorgesehen sein, dass mindestens ein Teil-Zwischenelement an einem inneren Rand und/oder an einem äußeren Rand über ein benachbartes Teil-Zwischenelement übersteht. Auf diese Weise ist es beispielsweise möglich, die beiden Teil-Zwischenelemente durch eine längs des inneren Randes oder des äußeren Randes verlaufende Schweißnaht miteinander zu verbinden und ferner das über das benachbarte Teil-Zwischenelement überstehende Teil-Zwischenelement mittels einer längs des äußeren Randes bzw. des inneren Randes des Teil-Zwischenelements verlaufenden Schweißnaht an dem Gehäuseteil der zweiten Brennstoffzelleneinheit festzulegen.

Bei einer bevorzugten Ausgestaltung der Erfindung ist vorgesehen, dass mindestens zwei Teil-Zwischenelemente so miteinander verbunden sind, dass sich mindestens ein Bereich des einen Teil-Zwischenelements relativ zu einem Bereich des anderen Teil-Zwischenelements bewegen kann. Auf diese Weise kann das mehrteilige Zwischenelement zum Ausgleich von Bauteiltoleranzen sowie zum Abbau von Zugspannungen dienen, die durch das Zusammenziehen beim Abkühlen der Schweißnähte oder beim zyklischen Aufheizen des Brennstoffzellenstapels auf Betriebstemperatur und Abkühlen auf Umgebungstemperatur entstehen.

Insbesondere können die mindestens zwei Teil-Zwischenelemente so miteinander verbunden sein, dass sich mindestens ein Bereich des einen Teil-Zwischenelements relativ zu einem Bereich des anderen Teil-Zwischenelements in der Stapelrichtung des Brennstoffzellenstapels bewegen kann.

Der vorliegenden Erfindung liegt die weitere Aufgabe zugrunde, ein Verfahren zum Herstellen eines Brennstoffzellenstapels, der mehrere Brennstoffzelleneinheiten umfasst, welche längs einer Stapelrichtung aufeinanderfolgen, wobei jede der Brennstoffzelleneinheiten ein Gehäuse mit mindestens einem Gehäuseteil aus einem metallischen Material umfasst, zu schaffen, durch welches die Gehäuse der Brennstoffzelleneinheiten so miteinander verbindbar sind, dass auch bei hoher Betriebstemperatur eine ausreichende elektrische Isolationswirkung, eine ausreichende Gasdichtheit und eine ausreichende mechanische Festigkeit gewährleistet sind.

Diese Aufgabe wird erfindungsgemäß durch ein Verfahren nach Anspruch 26 gelöst.

Alternativ oder ergänzend zu einem Zwischenelement mit einer elektrisch isolierenden Keramikbeschichtung kann auch ein Gehäuseteil der ersten Brennstoffzelleneinheit verwendet werden, das mit einer solchen elektrisch isolierenden Keramikbeschichtung versehen ist.

Besondere Ausgestaltungen des erfindungsgemäßen Verfahrens sind Gegenstand der Ansprüche 27 bis 32, deren Vorteile bereits vorstehend im Zusammenhang mit besonderen Ausgestaltungen des erfindungsgemäßen Bauelements erläutert worden sind.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische Explosionsdarstellung der Elemente einer Brennstoffzelleneinheit;
- Fig. 2: eine schematische Explosionsdarstellung der Brennstoffzelleneinheit aus Fig. 1, nachdem ein Substrat einer KEA-Einheit der Brennstoffzelleneinheit mit einem Gehäuseoberteil der Brennstoffzelleneinheit verlötet worden ist;
- Fig. 3: eine schematische Explosionsdarstellung der Brennstoffzelleneinheit aus Fig. 2, nachdem ein Zwischenelement der Brennstoffzelleneinheit mit einem Gehäuseunterteil der Brennstoffzelleneinheit verlötet worden ist;
- Fig. 4: eine schematische Explosionsdarstellung der Brennstoffzelleneinheit aus Fig. 3, nachdem das Gehäuseoberteil und das Gehäuseunterteil miteinander verschweißt worden sind, und einer weiteren, in der Stapelrichtung eines Brennstoffzellenstapels unter dieser ersten Brennstoffzelleneinheit angeordneten zweiten Brennstoffzelleneinheit gleichen Aufbaus;
- Fig. 5: eine schematische perspektivische Darstellung der beiden Brennstoffzelleneinheiten aus Fig. 4, nachdem das Zusatzelement der ersten Brennstoffzelleneinheit mit dem Gehäuseoberteil der zweiten Brennstoffzelleneinheit verschweißt worden ist;
- Fig. 6: eine schematische Draufsicht von oben auf einen Brennstoffzellenstapel;
- Fig. 7: eine ausschnittsweise, im Bereich eines Brenngaskanals teilweise geschnittene perspektivische Ansicht des Brennstoffzellenstapels;
- Fig. 8: einen schematischen vertikalen Schnitt durch den Brennstoffzellenstapel im Bereich eines Brenngaskanals, längs der Linie 8 - 8 in Fig. 6;
- Fig. 9: einen Ausschnitt aus Fig. 8, welcher einen vertikalen Schnitt durch nur eine Brennstoffzelleneinheit des Brennstoffzellenstapels zeigt;
- Fig. 10: eine vergrößerte Explosionsdarstellung des Bereichs I aus Fig. 9;
- Fig. 11: eine ausschnittsweise, im Bereich eines Oxidationsmittelkanals teilweise geschnittene perspektivische Darstellung des Brennstoffzellenstapels;
- Fig. 12: einen schematischen vertikalen Schnitt durch den Brennstoffzellenstapel im Bereich eines Oxidationsmittelkanals, längs der Linie 12 - 12 in Fig. 6;
- Fig. 13: einen Ausschnitt aus Fig. 12, welcher einen vertikalen Schnitt durch nur eine Brennstoffzelleneinheit des Stapels zeigt;
- Fig. 14: eine ausschnittsweise, in einem Bereich außerhalb der Fluidkanäle teilweise geschnittene perspektivische Darstellung des Brennstoffzellenstapels;
- Fig. 15: einen schematischen vertikalen Schnitt durch den Brennstoffzellenstapel in einem Bereich außerhalb der Fluidkanäle, längs der Linie 15 - 15 in Fig. 6;
- Fig. 16: einen Ausschnitt aus Fig. 15, der nur eine der Brennstoffzelleneinheiten des Brennstoffzellenstapels zeigt;
- Fig. 17: eine schematische Explosionsdarstellung der Elemente einer zweiten Ausführungsform eines Brennstoffzellenstapels;
- Fig. 18: eine schematische Explosionsdarstellung der Brennstoffzelleneinheit aus Fig. 17, nachdem ein Substrat einer KEA-Einheit der Brennstoffzelleneinheit mit einem Gehäuseoberteil der Brennstoffzelleneinheit verlötet worden ist und nachdem das Gehäuseoberteil und ein Gehäuseunterteil der Brennstoffzelleneinheit miteinander verschweißt worden sind;
- Fig. 19: eine schematische Explosionsdarstellung der Brennstoffzelleneinheit aus Fig. 18, nachdem das Gehäuseoberteil mit einem Zwischenelement der Brennstoffzelleneinheit verlötet worden ist, und einer weiteren, in der Stapelrichtung eines Brennstoffzellenstapels unter dieser ersten Brennstoffzelleneinheit angeordneten zweiten Brennstoffzelleneinheit gleichen Aufbaus;
- Fig. 20: eine schematische perspektivische Darstellung der beiden Brennstoffzelleneinheiten aus Fig. 19, nachdem das Zusatzelement der ersten Brennstoffzelleneinheit mit dem Gehäuseoberteil der zweiten Brennstoffzelleneinheit verlötet worden ist;
- Fig. 21: eine ausschnittsweise, im Bereich eines Oxidationsmittelkanals teilweise geschnittene perspektivische Darstellung des Brennstoffzellenstapels;
- Fig. 22: einen schematischen vertikalen Schnitt durch den Brennstoffzellenstapel im Bereich des Oxidationsmittelkanals;
- Fig. 23: eine vergrößerte Explosionsdarstellung des Bereichs II aus Fig. 22;
- Fig. 24: einen schematischen vertikalen Schnitt durch den Brennstoffzellenstapel im Bereich eines Brenngaskanals;
- Fig. 25: eine der Fig. 10 entsprechende vergrößerte Explosionsdarstellung eines mit einer Keramikbeschichtung versehenen Gehäuseunterteils einer Brennstoffzelleneinheit, einer Lotschicht und eines nicht mit einer Keramikbeschichtung versehenen Zwischenelements bei einer dritten Ausführungsform eines Brennstoffzellenstapels;
- Fig. 26: eine schematische Draufsicht von oben auf ein zweiteiliges Zwischenelement einer vierten Ausführungsform eines Brennstoffzellenstapels; und
- Fig. 27: einen schematischen vertikalen Schnitt durch ein mit einer Keramikbeschichtung versehenes Gehäuseunterteil einer ersten Brennstoffzelleneinheit, ein zweiteiliges Zwischenelement und ein Gehäuseoberteil einer zweiten Brennstoffzelleneinheit bei der vierten Ausführungsform eines Brennstoffzellenstapels.

Gleiche oder funktional äquivalente Elemente sind in allen Figuren mit denselben Bezugszeichen bezeichnet.

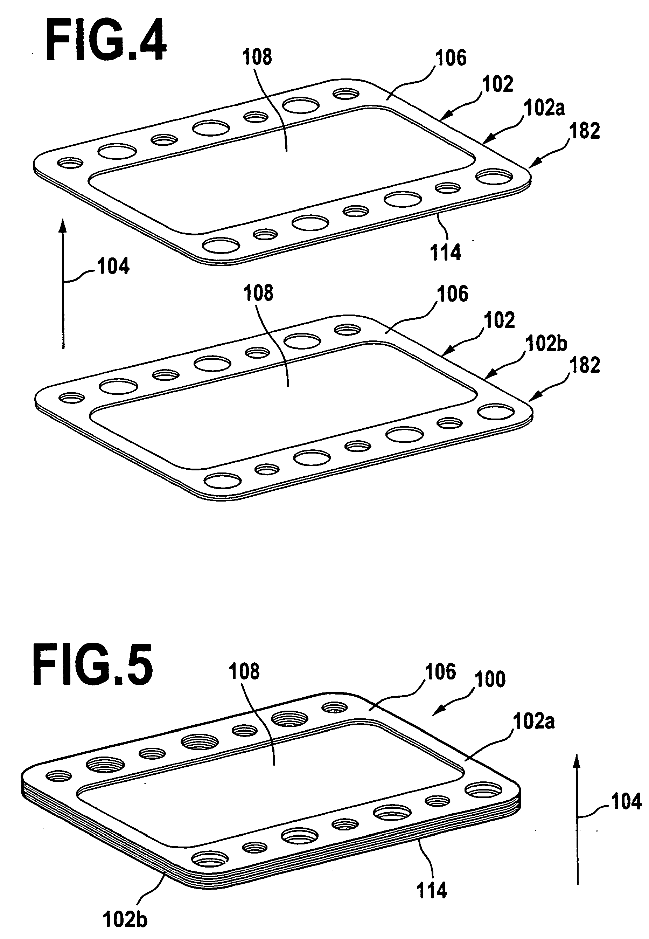

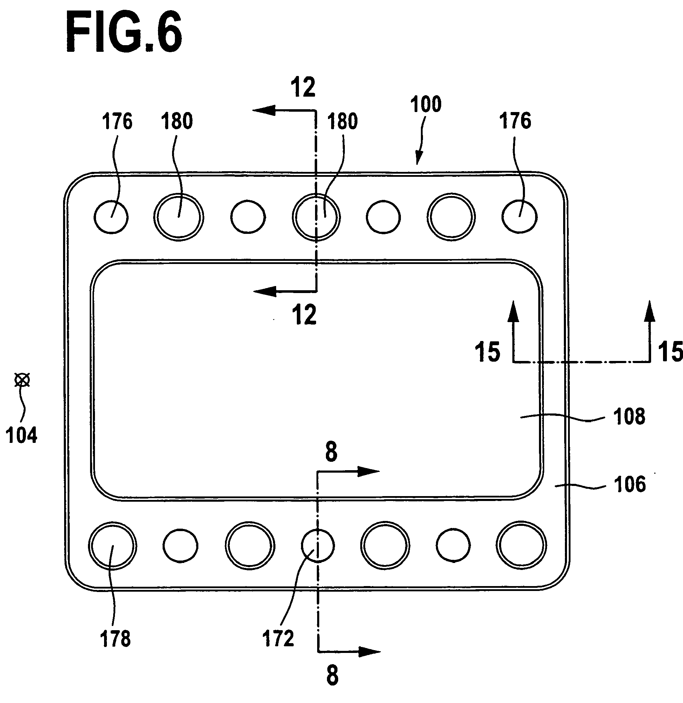

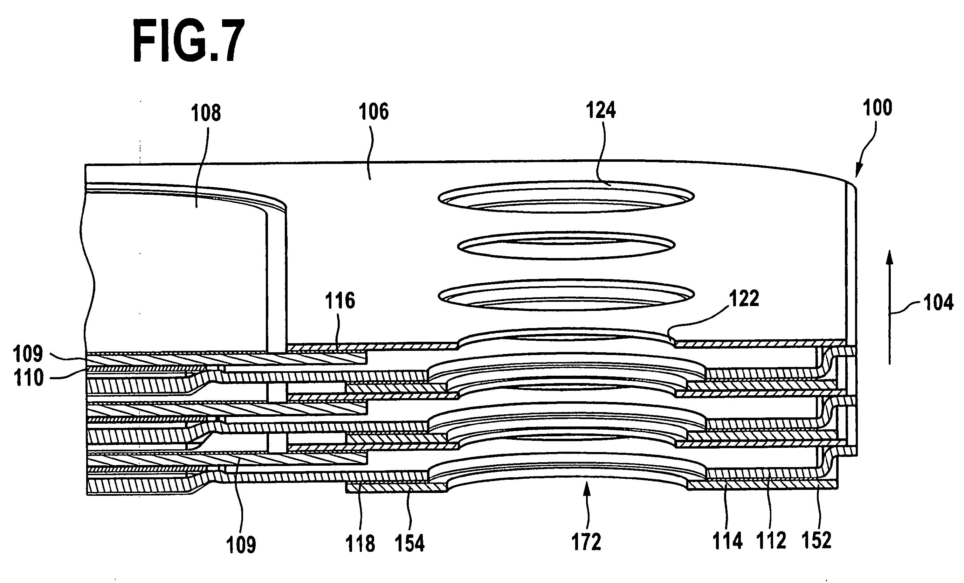

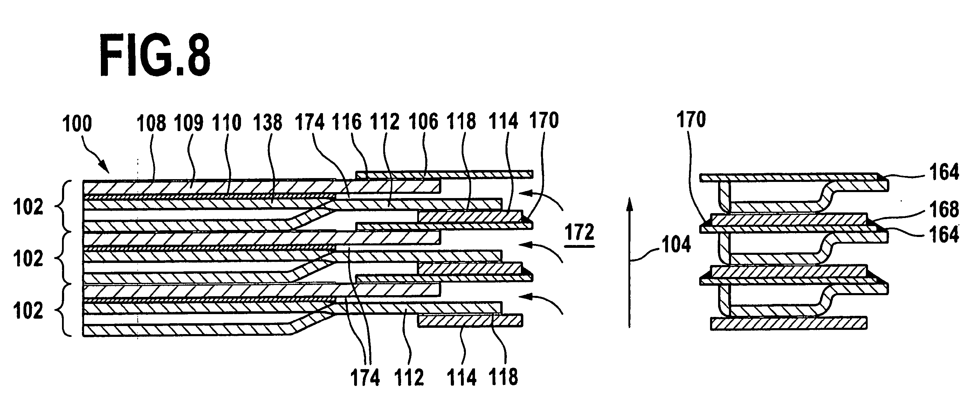

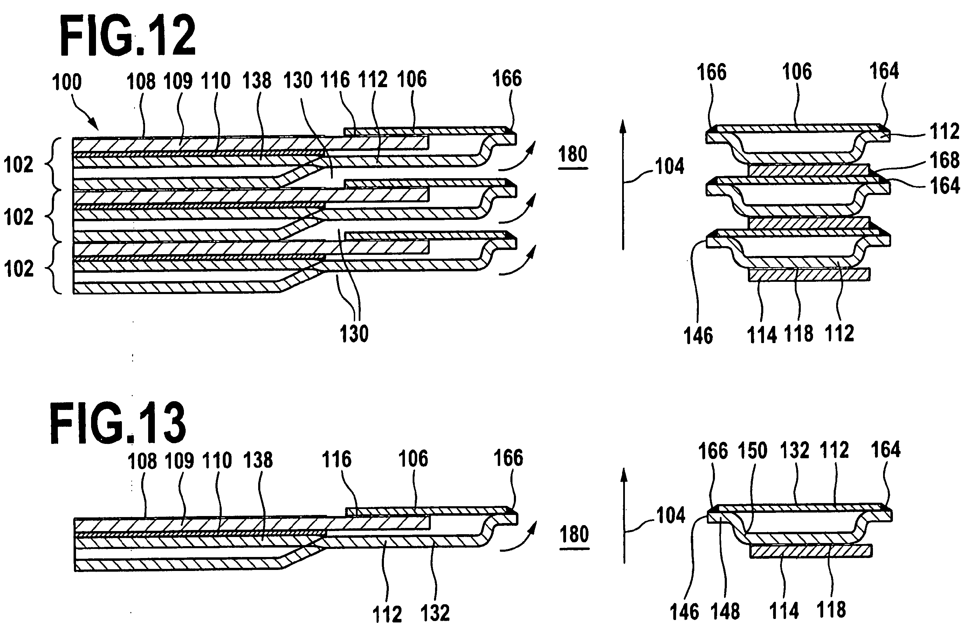

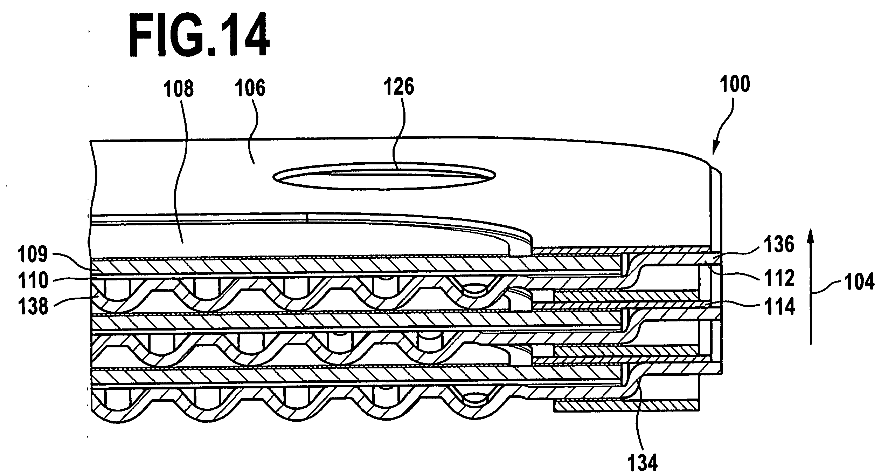

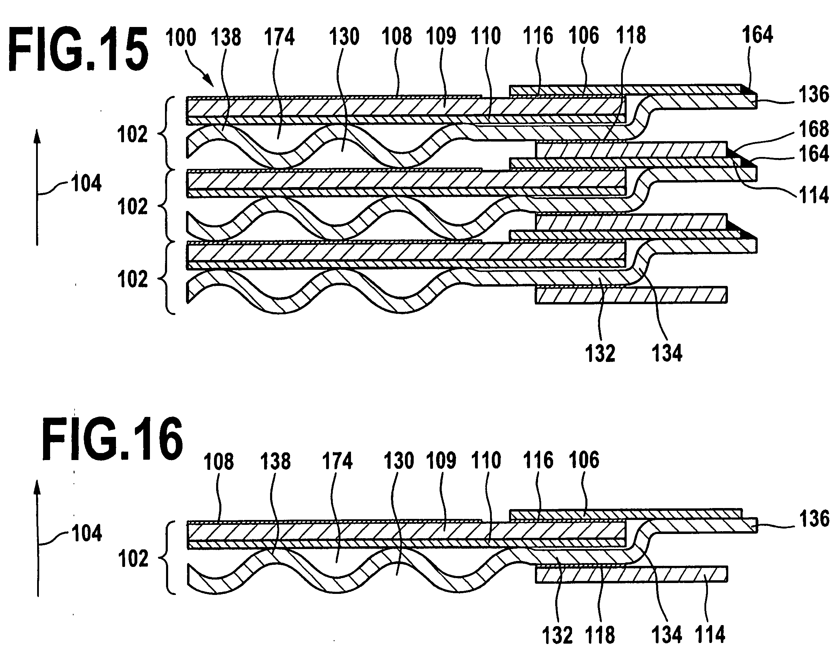

Ein in den Fig. 5 bis 16 dargestellter, als Ganzes mit 100 bezeichneter Brennstoffzellenstapel umfasst mehrere Brennstoffzelleneinheiten 102 von jeweils gleichem Aufbau, welche längs einer vertikalen Stapelrichtung 104 aufeinandergestapelt sind.

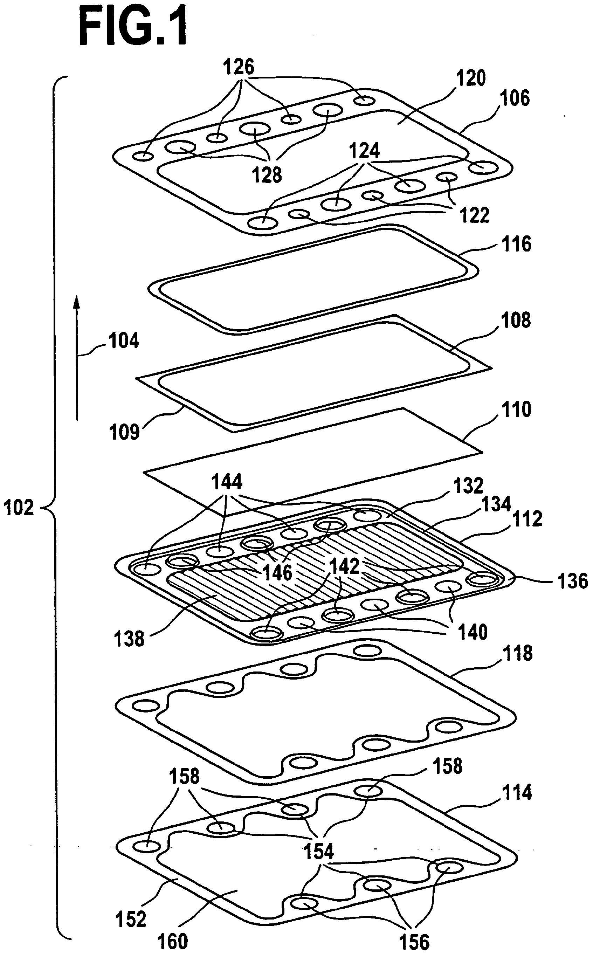

Jede der Brennstoffzelleneinheiten 102 umfasst die in Fig. 1 einzeln dargestellten Bestandteile, nämlich ein Gehäuseoberteil 106, eine Kathoden-Elektrolyt-Anoden-Einheit (KEA-Einheit) 108 auf einem Substrat 109, ein Kontaktmaterial 110, ein Gehäuseunterteil 112 und ein Zwischenelement 114.

Ferner ist in Fig. 1 eine erste Lötschicht 116 zum Verlöten des Substrates 109 mit dem Gehäuseoberteil 106 und eine zweite Lötschicht 118 zum Verlöten des Zwischenelements 114 mit dem Gehäuseunterteil 112 dargestellt.

Das Gehäuseoberteil 106 ist als eine im wesentlichen rechteckige und im wesentlichen ebene Blechplatte ausgebildet, welche mit einer im wesentlichen rechteckigen mittigen Durchtrittsöffnung 120 versehen ist, durch welche im fertig montierten Zustand der Brennstoffzelleneinheit die KEA-Einheit 108 der Brennstoffzelleneinheit 102 für eine Kontaktierung durch das Gehäuseunterteil 112 der in der Stapelrichtung 104 darüberliegenden Brennstoffzelleneinheit 102 zugänglich ist.

Auf der einen Seite der Durchtrittsöffnung 120 ist das Gehäuseoberteil 106 mit mehreren, beispielsweise drei, Brenngaszuführöffnungen 122 versehen, welche im Wechsel mit mehreren, beispielsweise vier, Oxidationsmittelzuführöffnungen 124 angeordnet sind.

Auf der gegenüberliegenden Seite der Durchtrittsöffnung 120 ist das Gehäuseoberteil 106 mit mehreren, beispielsweise vier, Brenngasabführöffnungen 126 versehen, die im Wechsel mit mehreren, beispielsweise drei, Oxidationsmittelabführöffnungen 128 angeordnet sind.

Das Gehäuseoberteil 106 ist vorzugsweise aus einem hochkorrosionsbeständigen Stahl, beispielsweise aus der Legierung Crofer 22, hergestellt.

Der Werkstoff Crofer 22 hat die folgende Zusammensetzung:
22 Gewichts-Prozent Chrom, 0,6 Gewichts-Prozent Aluminium, 0,3 Gewichts-Prozent Silizium, 0,45 Gewichts-Prozent Mangan, 0,08 Gewichts-Prozent Titan, 0,08 Gewichts-Prozent Lanthan, Rest Eisen.

Dieser Werkstoff wird von der Firma ThyssenKrupp VDM GmbH, Plettenberger Straße 2, 58791 Werdohl, Deutschland, vertrieben.

Die KEA-Einheit 108 umfasst eine direkt an der Oberseite des Substrats 109 angeordnete Anode, einen über der Anode angeordneten Elektrolyten und eine über dem Elektrolyten angeordnete Kathode, wobei diese einzelnen Schichten der KEA-Einheit 108 in den Zeichnungen nicht getrennt dargestellt sind.

Die Anode ist aus einem bei der Betriebstemperatur der Brennstoffzelleneinheit (von ungefähr 800 °C bis ungefähr 900 °C) elektrisch leitfähigen keramischen Material, beispielsweise aus ZrO₂ oder aus einem NiZrO₂-Cermet (Keramik-Metall-Gemisch), gebildet, welches porös ist, um einem durch das Substrat 109 hindurch gelangenden Brenngas den Durchtritt durch die Anode zu dem an die Anode angrenzenden Elektrolyten zu ermöglichen.

Als Brenngas kann beispielsweise ein kohlenwasserstoffhaltiges Gasgemisch oder reiner Wasserstoff verwendet werden.

Der Elektrolyt ist vorzugsweise als Feststoffelektrolyt, insbesondere als Feststoffoxid-Elektrolyt, ausgebildet und beispielsweise aus Yttrium-stabilisiertem Zirkoniumdioxid gebildet. Der Elektrolyt ist bei Umgebungs- wie bei Betriebstemperatur elektronisch nichtleitend. Hingegen nimmt seine ionische Leitfähigkeit mit steigender Temperatur zu.

Die Kathode ist aus einem bei der Betriebstemperatur der Brennstoffzelleneinheit elektrisch leitfähigen keramischen Material, beispielsweise aus (La_{0,8}Sr_{0,2})_{0,98}MnO₃, gebildet und porös, um einem Oxidationsmittel, beispielsweise Luft oder reinem Sauerstoff, aus einem an die Kathode angrenzenden Oxidationsmittelraum 130 den Durchtritt zu dem Elektrolyten zu ermöglichen.

Der gasdichte Elektrolyt der KEA-Einheit 108 erstreckt sich bis zum Rand der gasdurchlässigen Anode, wobei die Kathodenfläche kleiner als die Anodenfläche ist, so dass der Elektrolyt in seinem Randbereich mit dem Gehäuseoberteil 106 verlötet werden kann.

Das Substrat 109 kann beispielsweise als ein aus gesinterten Metallpartikeln bestehender poröser Sinterkörper ausgebildet sein.

Das Kontaktmaterial 110, das zwischen dem Substrat 109 und dem Gehäuseunterteil 112 angeordnet ist, kann beispielsweise als ein Netz, Gestrick oder Vlies aus Nickeldraht ausgebildet sein.

Das Gehäuseunterteil 112 ist als ein Blechformteil ausgebildet und umfasst eine im wesentlichen rechteckige, senkrecht zu der Stapelrichtung 104 ausgerichtete Platte 132, welche an ihren Rändern über eine Schräge 134 in einen ebenfalls im wesentlichen senkrecht zu der Stapelrichtung 104 ausgerichteten Randflansch 136 übergeht.

Die Platte 132 weist ein im wesentlichen rechteckiges, mittiges Kontaktfeld 138 auf, welches mit Kontaktelementen zur Kontaktierung des Kontaktmaterials 110 einerseits und der Kathode einer KEA-Einheit 108 einer benachbarten Brennstoffzelleneinheit 102 andererseits versehen ist, welche beispielsweise wellblechförmig oder noppenförmig ausgebildet seien können.

Auf der einen Seite des Kontaktfeldes 138 ist die Platte 132 mit mehreren, beispielsweise drei, Brenngaszuführöffnungen 140 versehen, welche im Wechsel mit mehreren, beispielsweise vier, Oxidationsmittelzuführöffnungen 142 angeordnet sind.

Die Brenngaszuführöffnungen 140 und die Oxidationsmittelzuführöffnungen 142 des Gehäuseunterteils 112 fluchten mit den Brenngaszuführöffnungen 122 bzw. den Oxidationsmittelzuführöffnungen 124 des Gehäuseoberteils 106.

Auf der anderen Seite des Kontaktfeldes 138 ist die Platte 132 mit mehreren beispielsweise vier, Brenngasabführöffnungen 144 versehen, welche im Wechsel mit mehreren, beispielsweise drei, Oxidationsmittelabführöffnungen 146 angeordnet sind.

Die Brenngasabführöffnungen 144 und die Oxidationsmittelabführöffnungen 146 des Gehäuseunterteils 112 fluchten mit den Brenngasabführöffnungen 126 bzw. mit den Oxidationsmittelabführöffnungen 128 des Gehäuseoberteils 106.

Die Oxidationsmittelabführöffnungen 146 liegen vorzugsweise den Brenngaszuführöffnungen 140 gegenüber, und die Brenngasabführöffnungen 144 liegen vorzugsweise den Oxidationsmittelzuführöffnungen 142 gegenüber.

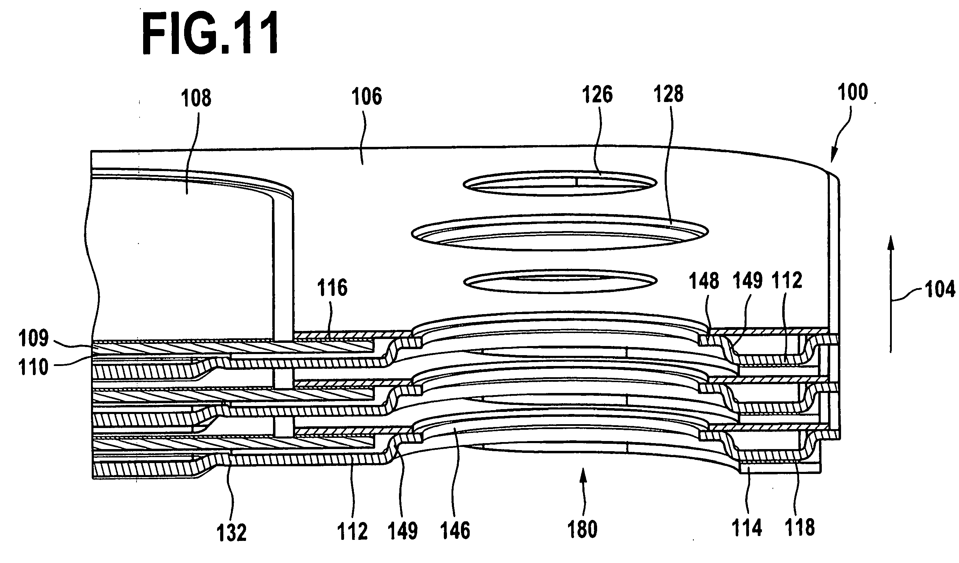

Wie am besten aus den Fig. 11 bis 13 zu ersehen ist, sind die Oxidationsmittelabführöffnungen 146 (ebenso wie die Oxidationsmittelzuführöffnungen 142) des Gehäuseunterteils 112 von jeweils einem die betreffende Öffnung ringförmig umgebenden, im wesentlichen senkrecht zur Stapelrichtung 104 ausgerichteten Ringflansch 148 umgeben, welcher über eine Schräge 149 mit der Platte 132 des Gehäuseunterteils 112 verbunden ist.

Das Gehäuseunterteil 112 ist vorzugsweise aus einem hochkorrosionsbeständigen Stahl, beispielsweise aus der vorstehend bereits genannten Legierung Crofer 22, hergestellt.

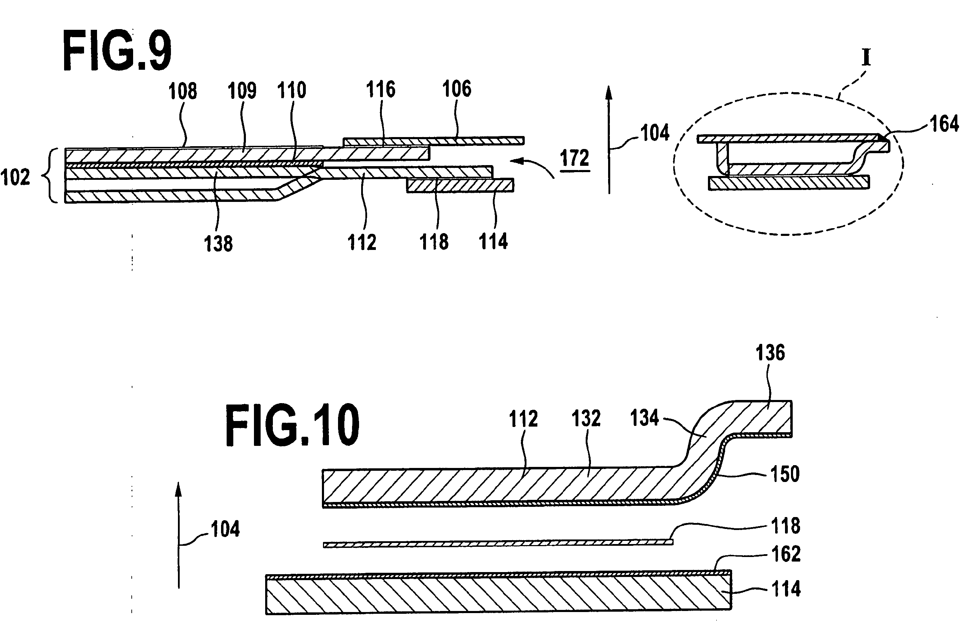

Wie aus Fig. 10 zu ersehen ist, ist das Gehäuseunterteil 112 an seiner dem Zwischenelement 114 zugewandten Unterseite mit einer Keramikbeschichtung 150 aus einem keramischen Material, welches bei der Betriebstemperatur der Brennstoffzelleneinheit 102 eine elektrische Isolationswirkung aufweist, versehen.

Die Keramikbeschichtung 150 des Gehäuseunterteils 112 kann sich über die gesamte Unterseite des Gehäuseunterteils 112 (mit Ausnahme der Unterseite des Kontaktfeldes 138) oder aber auch nur über die Stellen erstrecken, an denen das Gehäuseunterteil 112 mit dem Zwischenelement 114 verlötet wird.

Diese elektrisch isolierende Keramikbeschichtung 150 wird in einer Schichtdicke von beispielsweise ungefähr 30 µm bis beispielsweise ungefähr 500 µm durch thermisches Spritzen aufgebracht.

Hierfür geeignete Verfahren sind beispielsweise das atmosphärische Plasmaspritzen, das Vakuumplasmaspritzen oder das Flammspritzen.

Als Material für die Keramikbeschichtung 150 eignen sich beispielsweise die folgenden, durch thermisches Spritzen aufzubringenden Isoliermaterialien:
- 99,5 %-iges Aluminiumoxid;
- ein Gemisch aus 97 Gewichts-Prozent Aluminiumoxid und 3 Gewichts-Prozent Titandioxid;
- Yttrium-stabilisiertes Zirkoniumdioxid 5YSZ oder 8YSZ;
- ein Gemisch von 70 Gewichts-Prozent Aluminiumoxid und 30 Gewichts-Prozent Magnesiumoxid;
- ein Aluminium-Magnesium-Spinell.

Die Keramikbeschichtung 150 des Gehäuseunterteils 112 ist für die Funktion der Brennstoffzelleneinheit 102 nicht zwingend erforderlich und könnte auch entfallen.

Das Zwischenelement 114 umfasst einen im wesentlichen rechteckigen Rahmenteil 152, der sich ringförmig längs des Randes der Brennstoffzelleneinheit 102 erstreckt, sowie einstückig mit dem Rahmenteil 152 verbundene Kanalbegrenzungsteile 154, welche so ausgebildet sind, dass sie zusammen mit dem Rahmenteil 152 jeweils eine Brenngaszuführöffnung 156 bzw. jeweils eine Brenngasabführöffnung 158 des Zwischenelements 114 umschließen.

Die Brenngaszuführöffnungen 156 und die Brenngasabführöffnungen 158 des Zwischenelements 114 fluchten mit den Brenngaszuführöffnungen 140 bzw. den Brenngasabführöffnungen 144 des Gehäuseunterteils 112 sowie mit den Brenngas-Zuführöffnungen 122 bzw. mit den Brenngasabführöffnungen 126 des Gehäuseoberteils 106.

Das Zwischenelement 114 ist aus einem im wesentlichen ebenen Blech durch Ausstanzen der Brenngaszuführöffnungen 156 und der Brenngasabführöffnungen 158 sowie einer mittigen Durchtrittsöffnung 160 hergestellt.

Als Material für das Zwischenelement 114 wird vorzugsweise ein hochkorrosionsbeständiger Stahl, beispielsweise die bereits vorstehend genannte Legierung Crofer 22, verwendet.

Wie aus Fig. 10 zu ersehen ist, ist das Zwischenelement 114 an seiner dem Gehäuseunterteil 112 zugewandten Oberseite mit einer Keramikbeschichtung 162 aus einem keramischen Material, welches bei der Betriebstemperatur der Brennstoffzelleneinheit 102 eine elektrische Isolationswirkung aufweist, versehen.

Die Keramikbeschichtung 162 kann sich über die gesamte Oberseite des Zwischenelements 114 oder aber auch nur über die Stellen erstrecken, an denen das Zwischenelement 114 mit dem Gehäuseunterteil 112 verlötet wird.

Diese elektrisch isolierende Keramikbeschichtung 162 kann beispielsweise in einer Schichtdicke von beispielsweise ungefähr 30 µm bis ungefähr 500 µm durch thermisches Spritzen aufgebracht werden.

Hierfür geeignete Verfahren sind beispielsweise das atmosphärische Plasmaspritzen, das Vakuumplasmaspritzen oder das Flammspritzen.

Geeignete Isoliermaterialien, die mittels eines solchen thermischen Spritzverfahrens auf das Zwischenelement 114 aufzubringen sind, sind beispielsweise:
- 99,5 %-iges Aluminiumoxid;
- ein Gemisch aus 97 Gewichts-Prozent Aluminiumoxid und 3 Gewichts-Prozent Titandioxid;
- Yttrium-stabilisiertes Zirkoniumdioxid 5YSZ oder 8YSZ;
- ein Gemisch von 70 Gewichts-Prozent Aluminiumoxid und 30 Gewichts-Prozent Magnesiumoxid.

Alternativ zu einem Zwischenelement 114 mit einer durch thermisches Spritzen aufgebrachten keramischen Isolierschicht kann auch ein Zwischenelement 114 aus einem hochkorrosionsbeständigen Stahl, der Aluminium enthält, verwendet werden, welcher durch Voroxidation des aluminiumhaltigen metallischen Materials mit einer Keramikbeschichtung 162 aus Aluminiumoxid versehen worden ist.

Insbesondere kann ein solches Zwischenelement 114 aus der Stahllegierung gebildet sein, die unter der Bezeichnung "FeCrAlY" oder auch "Aluchrom Y" bekannt ist.

Die Zusammensetzung der FeCrAlY-Legierung ist die folgende: 30 Gewichts-Prozent Chrom, 5 Gewichts-Prozent Aluminium, 0,5 Gewichts-Prozent Yttrium, Rest Eisen.

Das durch Ausstanzen aus einem Blech aus dieser Stahllegierung hergestellte Zwischenelement 114 wird in eine sauerstoffhaltige Atmosphäre (beispielsweise in Luft) eingebracht und während einer Zeitdauer von beispielsweise zwei Stunden auf einer Temperatur von ungefähr 1100 °C gehalten. Durch diese Temperaturbehandlung in sauerstoffhaltiger Atmosphäre wird an den freien Außenflächen des Zwischenelements 114 die Keramikbeschichtung 162 aus Aluminiumoxid erzeugt.

Zur Herstellung der in Fig. 4 dargestellten Brennstoffzelleneinheiten 102 aus den vorstehend beschriebenen Einzelelementen wird wie folgt vorgegangen:
Zunächst wird das Gehäuseunterteil 112 auf die vorstehend beschriebene Weise mit der Keramikbeschichtung 150 und das Zwischenelement 114 auf die vorstehend beschriebene Weise mit der Keramikbeschichtung 162 versehen.

Anschließend wird das Substrat 109, auf dem die KEA-Einheit 108 angeordnet ist, längs des Randes seiner Oberseite mit dem Gehäuseoberteil 106 verlötet, und zwar an der Unterseite des die Durchtrittsöffnung 120 in dem Gehäuseoberteil 106 umgebenden Bereiches des Gehäuseoberteils 106.

Das hierfür benötigte Lötmaterial kann, wie in Fig. 1 dargestellt, als entsprechend zugeschnittene Lötfolie zwischen das Substrat 109 und das Gehäuseoberteil 106 eingelegt werden oder aber mittels eines Dispensers in Form einer Lötmaterialraupe auf die Oberseite des Substrats 109 und/oder auf die Unterseite des Gehäuseoberteils 106 aufgetragen werden. Ferner ist es auch möglich, das Lötmaterial mittels eines Musterdruckverfahrens, beispielsweise eines Siebdruckverfahrens, auf die Oberseite des Substrats 109 und/oder auf die Unterseite des Gehäuseoberteils 106 aufzubringen.

Als Lötmaterial kann ein Silberbasislot mit Kupferzusatz verwendet werden, beispielsweise ein Silberbasislot mit der Zusammensetzung (in mol-Prozent): Ag-4Cu oder Ag-8Cu.

Die Lötung erfolgt in einer Luftatmosphäre. Die Löttemperatur beträgt beispielsweise 1050 °C, die Lötdauer beispielsweise ungefähr 5 Minuten. Bei der Lötung in Luft bildet sich in situ Kupferoxid.

Alternativ hierzu kann als Lötmaterial auch ein Silberbasislot ohne Kupferzusatz verwendet werden. Ein solches kupferfreies Lot bietet den Vorteil einer höheren Solidustemperatur (diese beträgt ohne Kupferzusatz ungefähr 960 °C, mit Kupferzusatz ungefähr 780 °C). Da reines Silber Keramikoberflächen nicht benetzt, wird den Silberbasisloten ohne Kupferzusatz Kupfer(II)oxid zur Verkleinerung des Randwinkels zugesetzt. Die Lötung mit Silberbasisloten ohne Kupferzusatz erfolgt in einer Luftatmosphäre oder in einer Schutzgasatmosphäre, beispielsweise unter Argon.

Die Löttemperatur beträgt auch in diesem Fall vorzugsweise ungefähr 1050 °C, die Lötdauer beispielsweise ungefähr 5 Minuten.

Alternativ zum Einlöten des Substrats 109 mit der darauf angeordneten KEA-Einheit 108 in das Gehäuseoberteil 106 kann auch vorgesehen sein, dass ein Substrat 109, auf dem die KEA-Einheit 108 noch nicht erzeugt worden ist, mit dem Gehäuseoberteil 106 verschweißt wird und nach der Verschweißung die elektrochemisch aktiven Schichten der KEA-Einheit 108, d. h. deren Anode, Elektrolyt und Kathode, nacheinander im Vakuumplasmaspritzverfahren auf dem mit dem Gehäuseoberteil 106 bereits verschweißten Substrat 109 erzeugt werden.

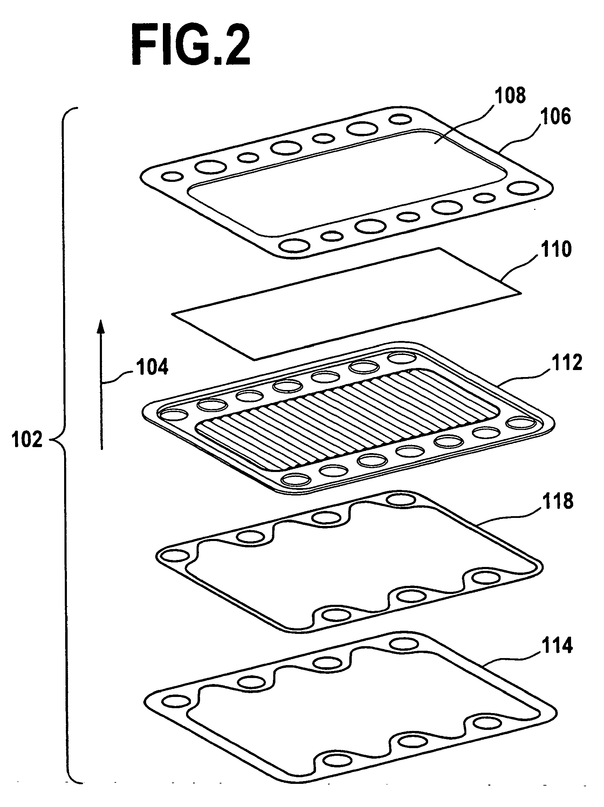

Nach der Verbindung des Substrats 109 mit dem Gehäuseoberteil 106 ist der in Fig. 2 dargestellte Zustand erreicht.

Nun wird das Zwischenelement 114 an seiner dem Gehäuseunterteil 112 zugewandten, mit der Keramikbeschichtung 162 versehenen Seite mittels eines Lötmaterials mit dem Gehäuseunterteil 112 an dessen dem Zwischenelement 114 zugewandten, mit der Keramikbeschichtung 150 versehenen Seite verlötet.

Hierbei können dieselben Lötmaterialien verwendet werden, die vorstehend im Zusammenhang mit der Verlötung des Substrats 109 und des Gehäuseoberteils 106 beschrieben worden sind, und der Lötvorgang kann unter denselben Bedingungen erfolgen.

Insbesondere kann also das hierfür benötigte Lötmaterial, wie in Fig. 2 dargestellt, als entsprechend zugeschnittene Lötfolie zwischen das Zwischenelement 114 und das Gehäuseunterteil 112 eingelegt werden oder aber mittels eines Dispensers in Form einer Lötmaterialraupe auf die Oberseite des Zwischenelements 114 und/oder auf die Unterseite des Gehäuseunterteils 112 aufgetragen werden. Ferner ist es auch möglich, das Lötmaterial mittels eines Musterdruckverfahrens, beispielsweise eines Siebdruckverfahrens, auf die Oberseite des Zwischenelements 114 und/oder auf die Unterseite des Gehäuseunterteils 112 aufzubringen.

Als Lötmaterial kann ein Silberbasislot mit Kupferzusatz verwendet werden, beispielsweise ein Silberbasislot mit der Zusammensetzung (in mol-Prozent): Ag-4Cu oder Ag-8Cu.

Die Lötung erfolgt in einer Luftatmosphäre. Die Löttemperatur beträgt beispielsweise 1050 °C, die Lötdauer beispielsweise ungefähr 5 Minuten. Bei der Lötung in Luft bildet sich in situ Kupferoxid.

Alternativ hierzu kann als Lötmaterial auch ein Silberbasislot ohne Kupferzusatz verwendet werden. Ein solches kupferfreies Lot bietet den Vorteil einer höheren Solidustemperatur (diese beträgt ohne Kupferzusatz ungefähr 960 °C, mit Kupferzusatz ungefähr 780 °C). Da reines Silber Keramikoberflächen nicht benetzt, wird den Silberbasisloten ohne Kupferzusatz Kupfer(II)oxid zur Verkleinerung des Randwinkels zugesetzt. Die Lötung mit Silberbasisloten ohne Kupferzusatz erfolgt in einer Luftatmosphäre oder in einer Schutzgasatmosphäre, beispielsweise unter Argon.

Geeignete Silberbasislote ohne Zusatz von elementarem Kupfer haben beispielsweise die Zusammensetzung (in mol-Prozent): Ag-4CuO oder Ag-8CuO).

Zur weiteren Verbesserung der Benetzung (Verkleinerung des Randwinkels) kann ein Zusatz von Titan dienen. Zur Herstellung der Lote wird ein inniges Gemenge der entsprechenden Komponenten in Pulverform verwendet. Aus diesem Gemenge bildet sich in situ die Lotlegierung. Das Titan wird diesem Gemenge in Form von Titanhydrid zugesetzt. Aus dem Hydrid bildet sich bei ungefähr 400°C ein metallisches Titan.

Geeignete Silberbasislote ohne Zusatz von elementarem Kupfer, aber mit Zusatz von Titan haben beispielsweise die Zusammensetzung (in mol-Prozent): Ag-4CuO-0,5Ti oder Ag-8CuO-0,5Ti.

Die Löttemperatur beträgt auch in diesem Fall vorzugsweise ungefähr 1050 °C, die Lötdauer beispielsweise ungefähr 5 Minuten.

Ferner können als Lötmaterial zum Verlöten des Zwischenelements 114 mit dem Gehäuseunterteil 112 auch Aktivlote verwendet werden.

Aktivlote sind metallische Legierungen, die grenzflächenaktive Elemente (z.B. Titan, Zirkonium, Hafnium, Niob und/oder Tantal) in geringen Mengen enthalten und somit in der Lage sind, die Grenzflächenenergie zwischen einem keramischen Material und der Lotschmelze so weit herabzusetzen, dass eine Benetzung des keramischen Materials durch das Lot erfolgen kann.

Die Aktivlöttechnik unter Verwendung von Aktivloten ermöglicht die Herstellung von Keramik-Keramik/Metall-Verbunden in einem einstufigen Fügeprozess, ohne vorhergehende Metallisierung der Keramikfügeflächen. Die Benetzung der Keramikfügeflächen durch das Lot wird hierbei durch die Verwendung eines Aktivlots sichergestellt.

Ein geeignetes Aktivlot wird beispielsweise unter der Bezeichnung "Copper ABA" von der Firma Wesgo Metals, 610 Quarry Road, San Carlos, CA 94070, USA, vertrieben.

Dieses Aktivlot hat die folgende Zusammensetzung: 2 Gewichts-% Al; 92,7 Gewichts-% Cu; 3 Gewichts-% Si; und 2,3 Gewichts-% Ti.

Der Lötvorgang kann insbesondere gemäß dem folgenden Temperaturprogramm durchgeführt werden:
- Sofern das Lotmaterial in Form einer Lotpaste aufgetragen wird, wird die Lotpaste während einer Dauer von ungefähr 10 Minuten bei einer Temperatur von ungefähr 150°C getrocknet.
- Anschließend erfolgt die Verlötung in drei Schritten, wobei in einem ersten Schritt die miteinander zu verlötenden Bauelemente während einer Stunde von Raumtemperatur auf eine Temperatur von ungefähr 300°C erwärmt werden, in einer anschließenden zweiten Stufe die zu verlötenden Bauelemente innerhalb von drei Stunden von einer Temperatur von ungefähr 300°C auf eine Temperatur von ungefähr 550°C erwärmt werden und in einem dritten Schritt die miteinander zu verlötenden Bauelemente innerhalb von drei Stunden von einher Temperatur von ungefähr 550°C auf eine Endtemperatur von ungefähr 1.050°C erwärmt werden, wobei die Endtemperatur für einen Zeitraum von beispielsweise ungefähr 5 Minuten gehalten wird.
- Nach erfolgter Verlötung erfolgt die Abkühlung der miteinander verlöteten Bauelemente auf Raumtemperatur über einen längeren Zeitraum, beispielsweise über Nacht.

Um ein unerwünschtes Fließen des Lotmaterials über den zu verlötenden Bereich hinaus zu verhindern, kann in den Bereichen des Zwischenelements 114 und des Gehäuseunterteils 112, welche frei von dem Lotmaterial bleiben sollen, ein Lotstopp-Material aufgetragen werden.

Geeignete Lotstopp-Materialien werden unter den Bezeichnungen "Stopyt Liquid" oder "Stopyt Liquid #62A" von der Firma Wesgo Metals, 610 Quarry Road, San Carlos, CA 94070, USA, vertrieben.

Wird der Lötvorgang im Vakuum oder in einer Schutzgasatmosphäre durchgeführt, so ist zu beachten, dass der Sauerstoffpartialdruck nicht unter eine bestimmte Untergrenze absinkt, da sonst die Kathode der KEA-Einheit 108 zerstört wird.

Im Falle einer Kathode aus Lanthanstrontiummanganat (LSM) beträgt die Untergrenze für den Sauerstoffpartialdruck ungefähr 1 ppm (10⁻⁴ bar); im Falle einer Kathode aus Lanthanstrontiumcobaltferrit (LSCF) beträgt die Untergrenze für den Sauerstoffpartialdruck ungefähr 10 ppm (10⁻³ bar).

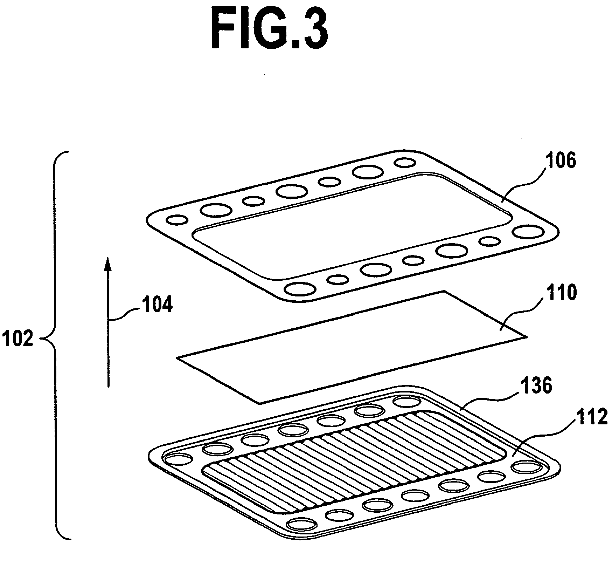

Nachdem das Zwischenelement 114 mit dem Gehäuseunterteil 112 verlötet worden ist, ist der in Fig. 3 dargestellte Zustand erreicht.

Allerdings ist es auch möglich, das Zwischenelement 114 mit dem Gehäuseunterteil 112 zu verlöten, bevor das Substrat 109 mit dem Gehäuseoberteil 106 verbunden wird, oder die Verbindung des Zwischenelements 114 und des Gehäuseunterteils 112 einerseits und des Substrats 109 und des Gehäuseoberteils 106 andererseits kann gleichzeitig erfolgen.

Anschließend wird das Kontaktmaterial 110, beispielsweise ein Nickelnetz, zwischen das Gehäuseunterteil 112 und das Gehäuseoberteil 106 eingelegt, und dann werden das Gehäuseunterteil 112 und das Gehäuseoberteil 106 längs einer Schweißnaht 164, die am äußeren Rand des Randflansches 136 des Gehäuseunterteils 112 und am äußeren Rand des Gehäuseoberteils 106 umläuft, und längs Schweißnähten 166, die an den inneren Rändern der Ringflansche 148 des Gehäuseunterteils 112 und der Ränder der Oxidationsmittelzuführöffnungen 124 bzw. der Oxidationsmittelabführöffnungen 128 des Gehäuseoberteils 106 umlaufen, gasdicht miteinander verschweißt.

Nach diesem Verfahrensschritt ist der in Fig. 4 dargestellte Zustand erreicht, in welchem fertig montierte Brennstoffzelleneinheiten 102 vorliegen, welche nun noch miteinander verbunden werden müssen, um aus einer Mehrzahl von in der Stapelrichtung 104 aufeinanderfolgenden Brennstoffzelleneinheiten 102 einen Brennstoffzellenstapel 100 zu bilden.

Die Verbindung zweier in der Stapelrichtung 104 aufeinanderfolgender Brennstoffzelleneinheiten 102 erfolgt in der folgenden Weise:
Eine erste Brennstoffzelleneinheit 102a und eine zweite Brennstoffzelleneinheit 102b werden derart in eine Schweißvorrichtung eingelegt, dass die Oberseite des Gehäuseoberteils 106 der zweiten Brennstoffzelleneinheit 102b flächig an der Unterseite des Zwischenelements 114 der ersten Brennstoffzelleneinheit 102a anliegt.

Anschließend wird das Zwischenelement 114 der ersten Brennstoffzelleneinheit 102a mittels einer Schweißnaht 168, die längs der Außenränder des Zwischenelements 114 und des Gehäuseoberteils 106 verläuft, und mittels Schweißnähten 170, welche rings um die Ränder der Brenngaszuführöffnungen 156 des Zwischenelements 114 und die Ränder der damit fluchtenden Brenngaszuführöffnungen 122 des Gehäuseoberteils 106 bzw. rings um die Ränder der Brenngasabführöffnungen 158 des Zwischenelements 114 und die Ränder der damit fluchtenden Brenngasabführöffnungen 126 des Gehäuseoberteils 106 umlaufen, gasdicht mit dem Gehäuseoberteil 106 verschweißt.

Nachdem auf diese Weise zwei Brennstoffzelleneinheiten 102 miteinander verbunden worden sind, kann der Brennstoffzellenstapel 100 durch sukzessives Anschweißen weiterer Brennstoffzelleneinheiten 102 an das Zwischenelement 114 der zweiten Brennstoffzelleneinheit 102b oder an das Gehäuseoberteil 106 der ersten Brennstoffzelleneinheit 102a in der Stapelrichtung 104 bis zu der gewünschten Anzahl von Brennstoffzelleneinheiten 102 nach und nach aufgebaut werden.

In dem fertiggestellten Brennstoffzellenstapel 100 bilden die jeweils miteinander fluchtenden Brenngaszuführöffnungen 122, 140 und 156 der Gehäuseoberteile 106, der Gehäuseunterteile 112 und der Zwischenelemente 114 jeweils einen Brenngaszuführkanal 172, welcher sich in jeder Brennstoffzelleneinheit 102 zwischen der Oberseite des Gehäuseunterteils 112 und der Unterseite des Gehäuseoberteils 106 zu einem Brenngasraum 174 hin öffnet, der zwischen der Oberseite des Kontaktfeldes 138 des Gehäuseunterteils 112 einerseits und der Unterseite des Substrats 109 der KEA-Einheit 108 andererseits ausgebildet ist.

Die jeweils miteinander fluchtenden Brenngasabführöffnungen 126, 144 und 158 der Gehäuseoberteile 106, der Gehäuseunterteile 112 und der Zwischenelemente 114 bilden jeweils einen Brenngasabführkanal 176, welcher auf der den Brenngaszuführkanälen 172 gegenüberliegenden Seite jeder Brennstoffzelleneinheit 102 im Bereich zwischen der Oberseite des Gehäuseunterteils 112 und der Unterseite des Gehäuseoberteils 106 zu dem Brenngasraum 174 hin geöffnet ist.

Die jeweils miteinander fluchtenden Oxidationsmittelzuführöffnungen 124 und 142 der Gehäuseoberteile 106 und der Gehäuseunterteile 112 sowie die zwischen den Kanalbegrenzungsteilen 154 der Brenngaszuführöffnungen 140 der Zwischenelemente 114 liegenden Bereiche der Durchtrittsöffnungen 160 in den Zwischenelementen 114 bilden zusammen jeweils einen Oxidationsmittelzuführkanal 178, der im Bereich jeder Brennstoffzelleneinheit 102 zwischen der Oberseite des Gehäuseoberteils 106 und der Unterseite des Gehäuseunterteils 112 der in der Stapelrichtung 104 darüberliegenden Brennstoffzelleneinheit 102 zu dem Oxidationsmittelraum 130 der Brennstoffzelleneinheit 102 hin geöffnet ist.

Ebenso bilden die jeweils miteinander fluchtenden Oxidationsmittelabführöffnungen 128 und 146 der Gehäuseoberteile 106 bzw. der Gehäuseunterteile 112 zusammen mit den zwischen den Kanalbegrenzungsteilen 154 der Brenngasabführöffnungen 144 der Zwischenelemente 114 liegenden Bereichen der Durchtrittsöffnungen 160 in den Zwischenelementen 114 jeweils einen Oxidationsmittelabführkanal 180, welcher auf der den Oxidationsmittelzuführkanälen 178 entgegengesetzten Seite der Brennstoffzelleneinheiten 102 angeordnet ist und sich ebenfalls im Bereich jeder Brennstoffzelleneinheit 102 zwischen der Oberseite des Gehäuseoberteils 106 und der Unterseite des Gehäuseunterteils 112 der in der Stapelrichtung 104 darüberliegenden Brennstoffzelleneinheit 102 zu dem Oxidationsmittelraum 130 der Brennstoffzelleneinheit 102 hin öffnet.

Im Betrieb des Brennstoffzellenstapels 100 wird ein Brenngas dem Brenngasraum 174 jeder Brennstoffzelleneinheit 102 über die Brenngaszuführkanäle 172 zugeführt und durch Oxidation an der Anode der KEA-Einheit 108 entstandenes Abgas sowie nicht verbrauchtes Brenngas durch die Brenngasabführkanäle 176 aus dem Brenngasraum 174 abgeführt.

Ebenso wird ein Oxidationsmittel, beispielsweise Luft, durch die Oxidationsmittelzuführkanäle 178 dem Oxidationsmittelraum 130 jeder Brennstoffzelleneinheit 102 zugeführt und nicht verbrauchtes Oxidationsmittel durch die Oxidationsmittelabführkanäle 180 aus dem Oxidationsmittelraum 130 abgeführt.

Im Betrieb des Brennstoffzellenstapels 100 weisen die KEA-Einheiten 108 eine Temperatur von beispielsweise 850 °C auf, bei welcher der Elektrolyt jeder KEA-Einheit 108 für Sauerstoffionen leitfähig ist. Das Oxidationsmittel aus dem Oxidationsmittelraum 130 nimmt an der Kathode Elektronen auf und gibt zweifach negativ geladene Sauerstoffionen an den Elektrolyten ab, welche durch den Elektrolyten zur Anode wandern. An der Anode wird das Brenngas aus dem Brenngasraum 174 durch die Sauerstoffionen aus dem Elektrolyten oxidiert und gibt dabei Elektronen an die Anode ab.

Die bei der Reaktion an der Anode frei werdenden Elektronen werden von der Anode über das Substrat 109, das Kontaktmaterial 110 und das Gehäuseunterteil 112 der an der Unterseite des Kontaktfeldes 138 des Gehäuseunterteils 112 anliegenden Kathode einer benachbarten Brennstoffzelleneinheit 102 zugeführt und ermöglichen so die Kathodenreaktion.

Das Gehäuseunterteil 112 und Gehäuseoberteil 106 jeder Brennstoffzelleneinheit 102 sind durch die Schweißnähte 164, 166 elektrisch leitend miteinander verbunden.

Die durch jeweils ein Gehäuseoberteil 106, ein Gehäuseunterteil 112 und ein Zwischenelement 114 gebildeten Gehäuse 182 von in der Stapelrichtung 104 aufeinanderfolgenden Brennstoffzelleneinheiten 102 sind jedoch durch die Keramikbeschichtungen 162 an der Oberseite der Zwischenelemente 114 und, falls vorhanden, durch die Keramikbeschichtungen 150 an der Unterseite der Gehäuseunterteile 112 elektrisch voneinander isoliert. Dabei ist durch die Verlötung der Zwischenelemente 114 mit den Gehäuseunterteilen 112 zugleich eine gasdichte Verbindung zwischen diesen Bauelementen gewährleistet, so dass die Oxidationsmittelräume 130 und die Brenngasräume 174 der Brennstoffzelleneinheiten 102 voneinander und von der Umgebung des Brennstoffzellenstapels 100 gasdicht getrennt sind.

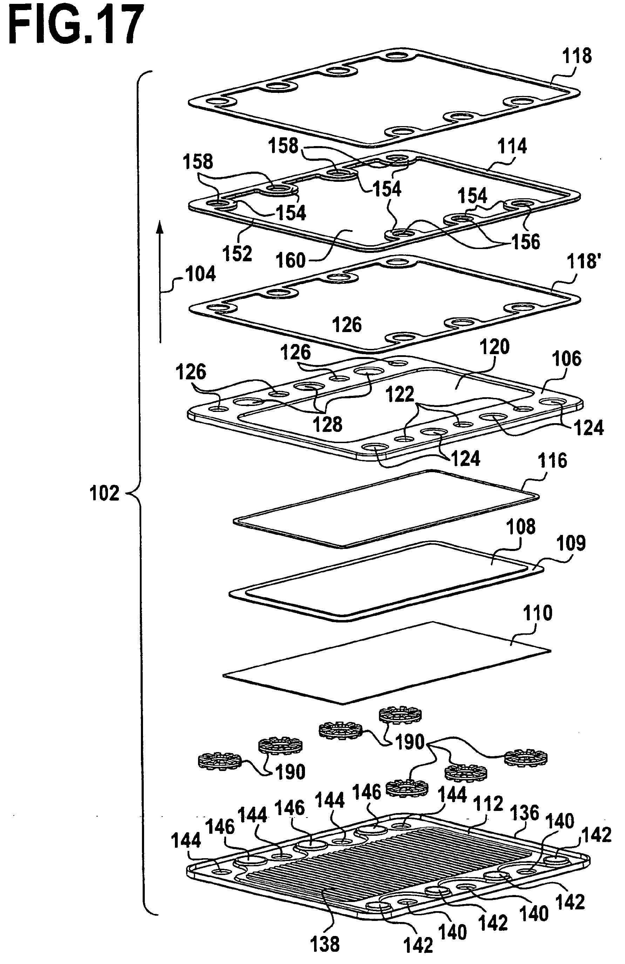

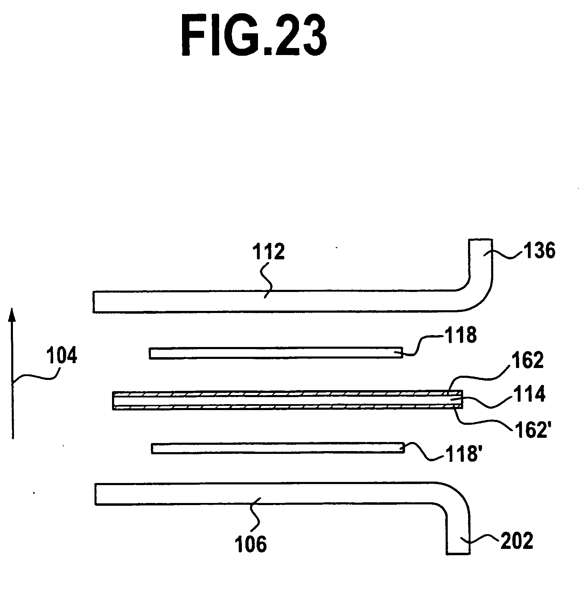

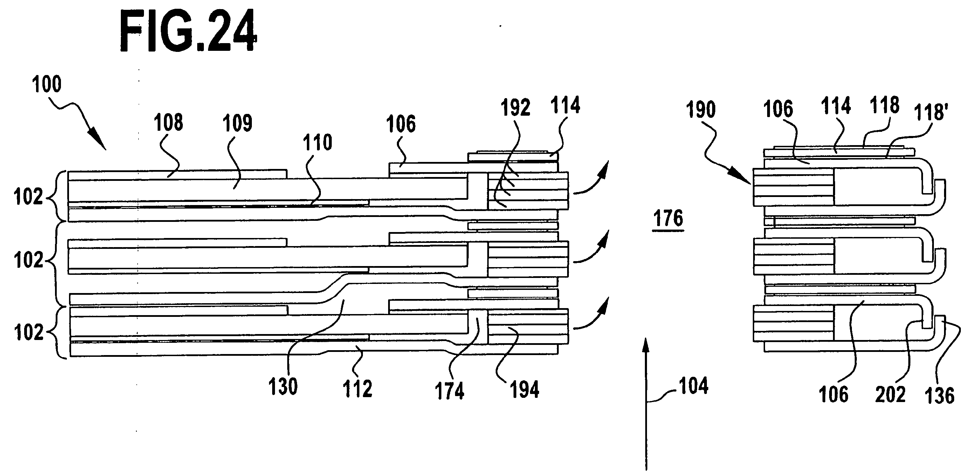

Eine in den Fig. 17 bis 24 dargestellte zweite Ausführungsform eines Brennstoffzellenstapels 100 unterscheidet sich von der in den Fig. 1 bis 16 dargestellten ersten Ausführungsform dadurch, dass die Zwischenelemente 114 bei der zweiten Ausführungsform nicht nur auf ihrer dem Gehäuseunterteil 112 der benachbarten Brennstoffzelleneinheit 102 zugewandten Seite, sondern auch auf der dem Gehäuseoberteil 106 der jeweils zugeordneten Brennstoffzelleneinheit 102 zugewandten Seite, also beidseitig, mit einer Keramikbeschichtung 162 bzw. 162' versehen sind, was am besten aus Fig. 23 zu ersehen ist.

Die Keramikbeschichtungen 162 und 162' können dabei genauso aufgebaut sein und hergestellt werden, wie dies im Zusammenhang mit der Keramikbeschichtung 162 der ersten Ausführungsform vorstehend beschrieben worden ist.

Dabei können die beiden Keramikbeschichtungen 162 und 162' hinsichtlich des verwendeten Materials und der Beschichtungsdicke miteinander übereinstimmen oder auch voneinander abweichen.

Da die dem Gehäuseoberteil 106 zugewandte Seite des Zwischenelements 114 mit der Keramikbeschichtung 162' versehen ist, wird das Zwischenelement 114 bei dieser Ausführungsform nicht mit dem Gehäuseoberteil 106 verschweißt, sondern vielmehr mittels einer zwischen der Keramikbeschichtung 162' und dem Gehäuseoberteil 106 angeordneten dritten Lotschicht 118' verlötet.

Hierbei ist zu beachten, dass das Zwischenelement 114 sowohl an seinem inneren Rand als auch an seinem äußeren Rand über die beiden Lotschichten 118 und 118' seitlich übersteht, um auszuschließen, dass diese beiden Lotschichten miteinander in Kontakt geraten können, was die elektrische Isolationswirkung der Dichtungsanordnung beeinträchtigen würde.

Die für die Verlötung des Zwischenelements 114 der zweiten Ausführungsform mit dem Gehäuseunterteil 112 bzw. mit dem Gehäuseoberteil 106 geeigneten Lote und Lötverfahren sind bereits vorstehend im Zusammenhang mit der Verlötung des Zwischenelements 114 der ersten Ausführungsform mit dem Gehäuseunterteil 112 beschrieben worden.

Die Brennstoffzelleneinheiten 102 der zweiten Ausführungsform unterscheiden sich von den Brennstoffzelleneinheiten 102 der ersten Ausführungsform ferner dadurch, dass das Gehäuseoberteil 106 der zweiten Ausführungsform nicht im wesentlichen eben ausgebildet ist, sondern eine im wesentlichen rechteckige, senkrecht zu der Stapelrichtung 104 ausgerichtete Platte 200 umfasst, welche an ihrem äußeren Rand in einen im wesentlichen parallel zu der Stapelrichtung 104 ausgerichteten Randflansch 202 übergeht.

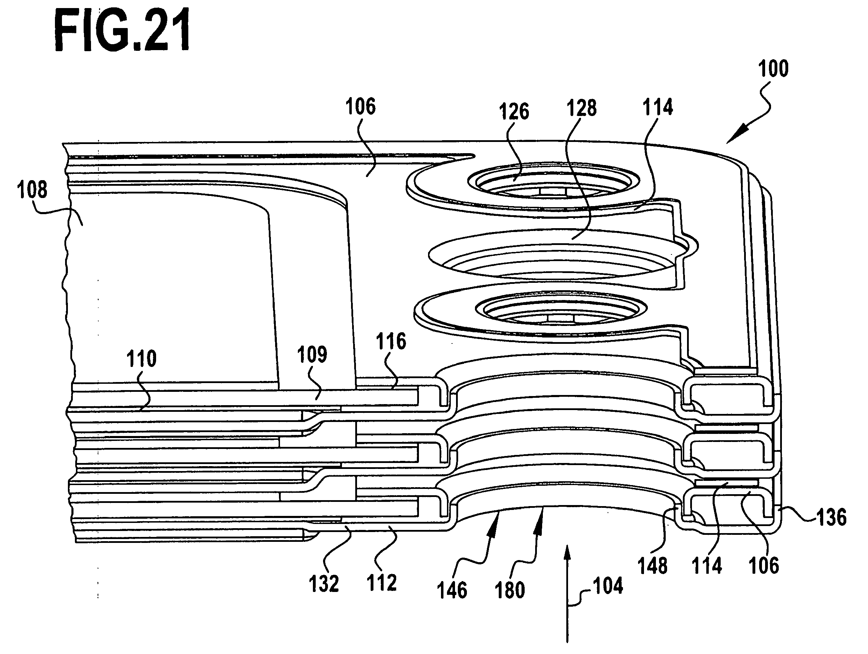

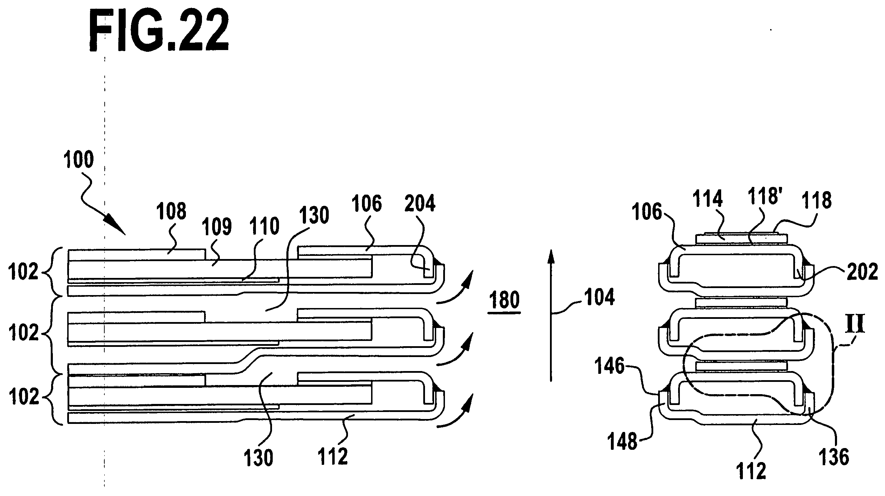

Ebenso sind bei dieser Ausführungsform, wie am besten aus den Fig. 21 und 22 zu ersehen ist, die Oxidationsmittelabführöffnungen 128 ebenso wie die Oxidationsmittelzuführöffnungen 124 des Gehäuseoberteils 106 von jeweils einem die betreffende Öffnung ringförmig umgebenden, im wesentlichen parallel zur Stapelrichtung 104 ausgerichteten Ringflansch 204 umgeben.

Das Gehäuseunterteil 112 der zweiten Ausführungsform unterscheidet sich von dem Gehäuseunterteil 112 der ersten Ausführungsform dadurch, dass die im wesentlichen rechteckige, senkrecht zu der Stapelrichtung 104 ausgerichtete Platte 132 des Gehäuseunterteils 112 der zweiten Ausführungsform an ihrem äußeren Rand unmittelbar in einen im wesentlichen parallel zu der Stapelrichtung 104 ausgerichteten Randflansch 136 übergeht.

Wie am besten aus den Fig. 21 und 22 zu ersehen ist, sind ferner die Oxidationsmittelabführöffnungen 146 (ebenso wie die Oxidationsmittelzuführöffnungen 142) des Gehäuseunterteils 112 von jeweils einem die betreffende Öffnung ringförmig umgebenden, im wesentlichen parallel zur Stapelrichtung 104 ausgerichteten Ringflansch 148 umgeben.

Zur mechanischen Stabilisierung der Brennstoffzelleneinheit 102 sind bei der zweiten Ausführungsform ferner Abstandshalterringe 190 vorgesehen, welche im Bereich der Brenngaszuführöffnungen 122 bzw. 140 und im Bereich der Brenngasabführöffnungen 126 bzw. 144 zwischen dem Gehäuseoberteil 104 und dem Gehäuseunterteil 112 der Brennstoffzelleneinheit 102 angeordnet sind, um das Gehäuseoberteil 106 und das Gehäuseunterteil 112 in diesem Bereich auf Abstand voneinander zu halten.

Jeder der Abstandshalterringe 190 besteht aus mehreren übereinandergelegten Metalllagen 192, wobei durch Ausnehmungen in den Metalllagen 192 Brenngasdurchtrittskanäle 194 ausgebildet sind, welche den Durchtritt von Brenngas durch die Abstandshalterringe 190 hindurch ermöglichen.

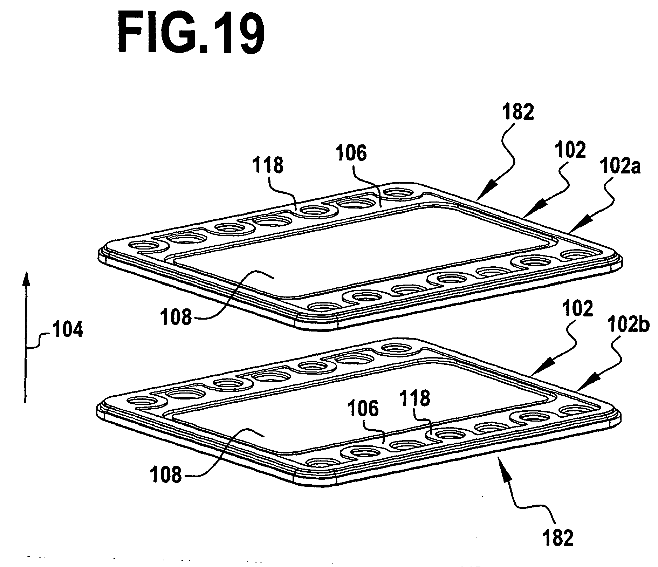

Zur Herstellung der in Fig. 19 dargestellten Brennstoffzelleneinheiten 102 aus deren Einzelelementen wird wie folgt vorgegangen:
Zunächst wird das Substrat 109, auf dem die KEA-Einheit 108 angeordnet ist, längs des Randes seiner Oberseite mit dem Gehäuseoberteil 106 verlötet, und zwar mittels der ersten Lotschicht 116 an der Unterseite des die Durchtrittsöffnung 120 in dem Gehäuseoberteil 106 umgebenden Bereiches des Gehäuseoberteils 106.

Anschließend werden das Kontaktmaterial 110 und die Abstandshalterringe 190 zwischen das Gehäuseunterteil 112 und das Gehäuseoberteil 106 eingelegt und gegebenenfalls mit dem Gehäuseunterteil 112 und/oder mit dem Gehäuseoberteil 106 verlötet und/oder verschweißt, und dann werden das Gehäuseunterteil 112 und das Gehäuseoberteil 106 längs einer Schweißnaht, die am äußeren Rand des Randflansches 136 des Gehäuseunterteils 112 und am Randflansch 202 des Gehäuseoberteils 106 umläuft, und längs Schweißnähten, die an den inneren Rändern der Ringflansche 148 des Gehäuseunterteils 112 und an den Ringflanschen 204 der Oxidationsmittelzuführöffnungen 124 bzw. der Oxidationsmittelabführöffnungen 128 des Gehäuseoberteils 106 umlaufen, gasdicht miteinander verschweißt.

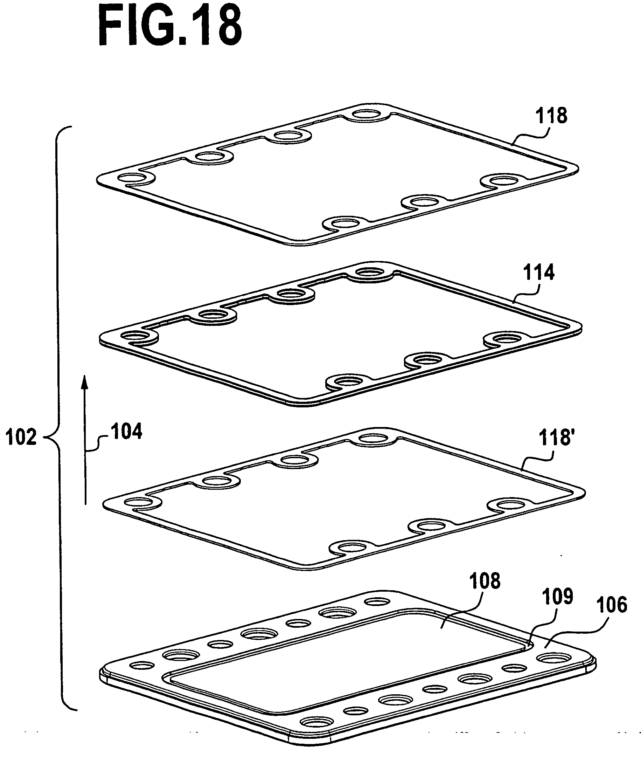

Nach diesem Verfahrensschritt ist der in Fig. 18 dargestellte Zustand erreicht.

Nun wird das beidseitig mit Keramikbeschichtungen 162 bzw. 162' versehene Zwischenelement 114 an seiner dem Gehäuseoberteil 106 zugewandten, mit der Keramikbeschichtung 162' versehenen Seite mittels der Lotschicht 118' mit dem Gehäuseoberteil 106 an dessen dem Zwischenelement 114 zugewandter Oberseite verlötet.

Hierbei können dieselben Lötmaterialien verwendet werden, die vorstehend im Zusammenhang mit der Verlötung des Zwischenelements 114 der ersten Ausführungsform und des Gehäuseunterteils 112 beschrieben worden sind, und der Lötvorgang kann unter denselben Bedingungen erfolgen.

Nachdem das Zwischenelement 114 mit dem Gehäuseoberteil 106 verlötet worden ist und auf der Keramikbeschichtung 162 auf der dem Gehäuseoberteil 106 abgewandten Seite des Zwischenelements 114 die weitere Lötschicht 118 aufgebracht worden ist, ist der in Fig. 19 dargestellte Zustand erreicht.

Allerdings ist es auch möglich, das Zwischenelement 114 mit dem benachbarten Gehäuseunterteil 112 zu verlöten, bevor das Zwischenelement 114 mit dem Gehäuseoberteil 106 verlötet wird.

Ferner kann auch vorgesehen sein, dass die Lotschicht 118' auf die Oberseite des Gehäuseoberteils 106 und die Lotschicht 118 auf die Unterseite des Gehäuseunterteils 112 aufgebracht, beispielsweise aufgedruckt, werden und anschließend das mit den Keramikbeschichtungen 162, 162' versehene Zwischenelement 114 zwischen die beiden Lotschichten eingebracht und mit dem Gehäuseoberteil 106 und dem Gehäuseunterteil 112 gleichzeitig unter Gewichtsbelastung verlötet wird.

Ausgehend von dem in Fig. 19 dargestellten Zustand werden zwei in der Stapelrichtung 104 aufeinanderfolgende Brennstoffzelleneinheiten 102 dadurch miteinander verbunden, dass das Gehäuseunterteil 112 der oberen Brennstoffzelleneinheit 102a mittels der Lotschicht 118 mit dem Zwischenelement 114 der darunterliegenden Brennstoffzelleneinheit 102b verlötet wird.

Hierbei können dieselben Lötmaterialien verwendet werden, die vorstehend im Zusammenhang mit der Verlötung des Zwischenelements 114 der ersten Ausführungsform und des benachbarten Gehäuseunterteils 112 beschrieben worden sind, und der Lötvorgang kann unter denselben Bedingungen erfolgen.

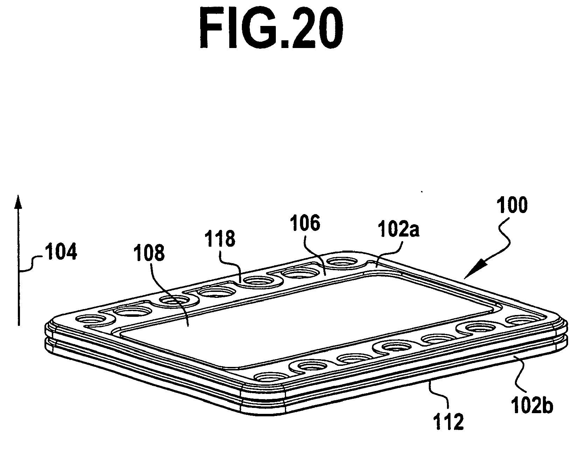

Die auf diese Weise miteinander verbundenen Brennstoffzelleneinheiten 102a und 102b sind in Fig. 20 dargestellt.

Zur Erweiterung des Brennstoffzellenstapels 100 können weitere Brennstoffzelleneinheiten 102 an die obere Brennstoffzelleneinheit 102a und/oder an die untere Brennstoffzelleneinheit 102b angelötet werden.

Das Gehäuseunterteil 112 und das Gehäuseoberteil 106 jeder Brennstoffzelleneinheit 102 sind dabei durch die vorstehend beschriebenen Schweißnähte elektrisch leitend miteinander verbunden.

Die durch jeweils ein Gehäuseoberteil 106 und ein Gehäuseunterteil 112 gebildeten Gehäuse 182 von in der Stapelrichtung 104 aufeinanderfolgenden Brennstoffzelleneinheiten 102 sind jedoch durch die von dem Zwischenelement 114 und den daran angeordneten Keramikbeschichtungen 162, 162' gebildete Dichtungsanordnung zwischen der Oberseite der Gehäuseoberteile 106 und der Unterseite der Gehäuseunterteile 112 elektrisch voneinander isoliert.

Dabei ist durch diese Dichtungsanordnung zugleich eine gasdichte Verbindung zwischen diesen Bauelementen gewährleistet, so dass die Oxidationsmittelräume 130 und die Brenngasräume 174 der Brennstoffzelleneinheiten 102 voneinander und von der Umgebung des Brennstoffzellenstapels 100 gasdicht getrennt sind.

Im übrigen stimmt die in den Fig. 17 bis 24 dargestellte zweite Ausführungsform eines Brennstoffzellenstapels hinsichtlich Aufbau und Funktion mit der in den Fig. 1 bis 16 dargestellten ersten Ausführungsform überein, auf deren vorstehende Beschreibung insoweit Bezug genommen wird.

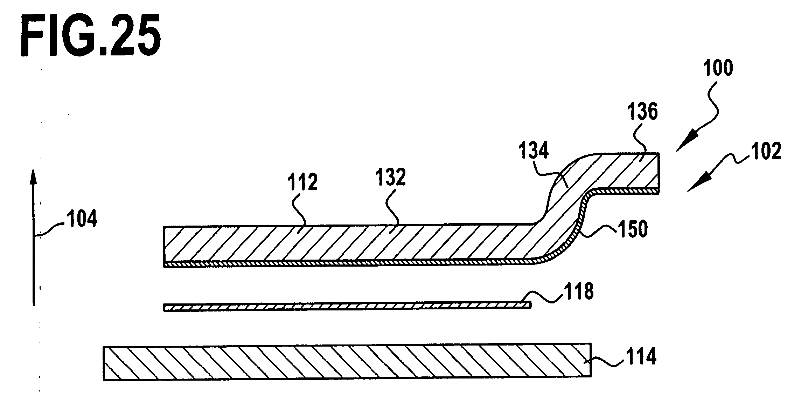

Eine in Fig. 25 dargestellte dritte Ausführungsform eines Brennstoffzellenstapels unterscheidet sich von der in den Fig. 1 bis 16 dargestellten ersten Ausführungsform lediglich dadurch, dass die Zwischenelemente 114 bei der dritten Ausführungsform nicht mit einer elektrisch isolierenden Keramikbeschichtung versehen sind, sondern ausschließlich aus metallischem und elektrisch leitfähigem Material bestehen.

Die elektrische Isolationswirkung der Dichtungsanordnung wird bei dieser Ausführungsform dadurch gewährleistet, dass das Gehäuseunterteil 112 der jeweils in der Stapelrichtung 104 über einem Zwischenelement 114 angeordneten Brennstoffzelleneinheit 102 an seiner dem Zwischenelement 114 zugewandten Unterseite mit einer Keramikbeschichtung 150 aus einem keramischen Material, welches bei der Betriebstemperatur der Brennstoffzelleneinheit 102 eine elektrische Isolationswirkung aufweist, versehen ist.

Die Keramikbeschichtung 150 des Gehäuseunterteils 112 kann dabei genauso aufgebaut sein und hergestellt werden, wie dies im Zusammenhang mit der Keramikbeschichtung 150 der ersten Ausführungsform des Brennstoffzellenstapels vorstehend beschrieben worden ist.

Das mit der Keramikbeschichtung 150 versehene Gehäuseunterteil 112 wird an seiner dem Zwischenelement 114 zugewandten, mit der Keramikbeschichtung 150 versehenen Seite mittels der Lotschicht 118 mit dem nicht mit einer Keramikbeschichtung 162 versehenen Zwischenelement 114 an dessen dem Gehäuseunterteil 112 zugewandter Oberseite verlötet, wie dies vorstehend im Zusammenhang mit der Verlötung des Zwischenelements 114 und des Gehäuseunterteils 112 der ersten Ausführungsform des Brennstoffzellenstapels 100 beschrieben worden ist.

Im übrigen stimmt die in Fig. 25 dargestellte dritte Ausführungsform eines Brennstoffzellenstapels hinsichtlich Aufbau und Funktion mit der in den Fig. 1 bis 16 dargestellten ersten Ausführungsform überein, auf deren vorstehende Beschreibung insoweit Bezug genommen wird.

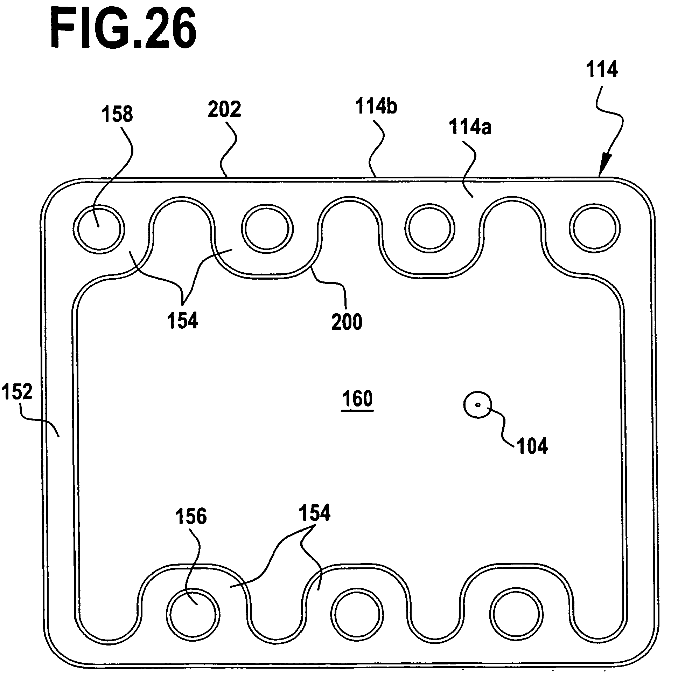

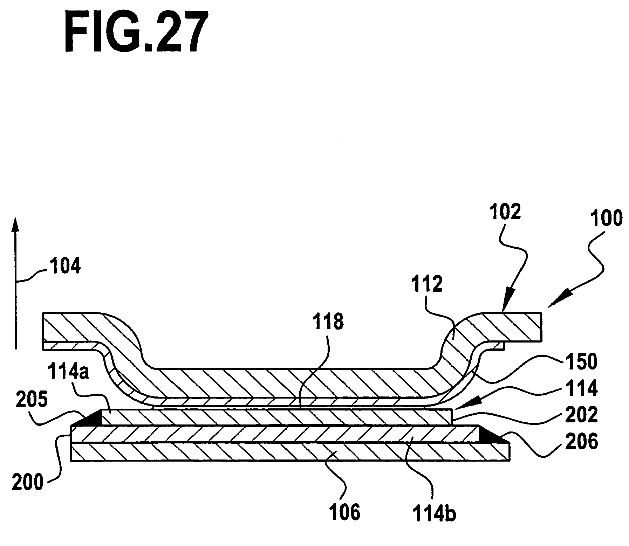

Eine in den Fig. 26 und 27 dargestellte vierte Ausführungsform eines Brennstoffzellenstapels 100 unterscheidet sich von den vorstehend beschriebenen Ausführungsformen dadurch, dass die Zwischenelemente 114 bei der vierten Ausführungsform nicht einteilig, sondern zweiteilig ausgebildet sind.

Wie aus den Fig. 26 und 27 zu ersehen ist, umfasst jedes der Zwischenelemente 114 jeweils zwei Teil-Zwischenelemente 114a und 114b, welche beide im wesentlichen wie eines der einteiligen Zwischenelemente 114 der vorstehend beschriebenen Ausführungsformen ausgebildet sind.

Jedes der Teil-Zwischenelemente 114a, 114b umfasst demnach einen im wesentlichen rechteckigen Rahmenteil 152, der sich ringförmig längs des Randes der Brennstoffzelleneinheit 102 erstreckt, sowie einstückig mit dem Rahmenteil 152 verbundene Kanalbegrenzungsteile 154, welche so ausgebildet sind, dass sie zusammen mit dem Rahmenteil 152 jeweils eine Brenngaszuführöffnung 156 bzw. jeweils eine Brenngasabführöffnung 158 des jeweiligen Teil-Zwischenelements 114a bzw. 114b umschließen.

Die Brenngaszuführöffnungen 156 und die Brenngasabführöffnungen 158 der Teil-Zwischenelemente 114a, 114b fluchten miteinander und mit den Brenngaszuführöffnungen 140 bzw. den Brenngasabführöffnungen 144 des Gehäuseunterteils 112 sowie mit den Brenngaszuführöffnungen 122 bzw. mit den Brenngasabführöffnungen 126 des Gehäuseoberteils 106.

Die Teil-Zwischenelemente 114a, 114b sind jeweils aus einem im wesentlichen ebenen Blech durch Ausstanzen der Brenngaszuführöffnungen 156 und der Brenngasabführöffnungen 158 sowie einer mittigen Durchtrittsöffnung 160 hergestellt.

Als Material für die Teil-Zwischenelemente 114 wird vorzugsweise ein hochkorrosionsbeständiger Stahl, beispielsweise die Legierung Crofer 22, verwendet.

Wie aus den Fig. 26 und 27 zu ersehen ist, steht das dem Gehäuseoberteil 106 einer benachbarten Brennstoffzelleneinheit 102 benachbarte Teil-Zwischenelement 114b sowohl längs seines inneren Randes 200 als auch längs seines äußeren Randes 202 und längs der Ränder der Brenngaszuführöffnungen 156 und der Ränder der Brenngasabführöffnungen 158 seitlich, d.h. in einer zu der Stapelrichtung 104 senkrechten Richtung, über die entsprechenden Ränder des dem Gehäuseunterteil 112 einer benachbarten Brennstoffzelleneinheit 102 benachbarten Teil-Zwischenelements 114a über.

Das erste Teil-Zwischenelement 114a und das zweite Teil-Zwischenelement 114b sind mittels an den inneren Rändern 200 der Teil-Zwischenelemente 114a, 114b und längs der Ränder der Brenngaszuführöffnungen 156 sowie der Brenngasabführöffnungen 158 umlaufender Schweißnähte 205 gasdicht miteinander verbunden.

Ferner ist das zweite Teil-Zwischenelement 114b mittels einer längs seines äußeren Randes 202 umlaufenden Schweißnaht 206 gasdicht mit der Oberseite des Gehäuseoberteils 106 der angrenzenden Brennstoffzelleneinheit 102 verbunden.

Die äußeren Ränder 202 des ersten Teil-Zwischenelements 114a und des zweiten Teil-Zwischenelements 114b sind jedoch nicht miteinander verschweißt und auch in keiner anderen Weise aneinander festgelegt, so dass sich der an den äußeren Rand 202 angrenzende Bereich des ersten Teil-Zwischenelements 114a geringfügig relativ zu dem zweiten Teil-Zwischenelement 114b, und zwar insbesondere längs der Stapelrichtung 104 des Brennstoffzellenstapels 100, bewegen kann.

Durch diese geringfügige. Beweglichkeit der Teil-Zwischenelemente 114a und 114b relativ zueinander ist es möglich, Bauteiltoleranzen auszugleichen sowie Zugspannungen abzubauen, die durch das Zusammenziehen beim Abkühlen der Schweißnähte 205, 206 und/oder beim zyklischen Aufheizen auf Betriebstemperatur und Abkühlen auf Umgebungstemperatur des Brennstoffzellenstapels 100 im Betrieb des Brennstoffzellenstapels 100 entstehen.

Auf diese Weise werden die Dichtigkeit und Standzeit des erfindungsgemäßen Brennstoffzellenstapels 100 erhöht.

Bei der in den Fig. 26 und 27 dargestellten vierten Ausführungsform eines Brennstoffzellenstapels 100 ist keines der Teil-Zwischenelemente 114a, 114b mit einer elektrisch isolierenden Keramikbeschichtung versehen.

Vielmehr wird die elektrische Isolationswirkung der Dichtungsanordnung bei dieser Ausführungsform durch eine elektrisch isolierende Keramikbeschichtung 150 an der Unterseite des an das Zwischenelement 114 angrenzenden Gehäuseunterteils 112 gewährleistet.

Das erste Teil-Zwischenelement 114a ist bei dieser Ausführungsform in derselben Weise mittels einer Lotschicht 118 mit der Keramikbeschichtung 150 des Gehäuseunterteils 112 verbunden wie bei der vorstehend beschriebenen, in den Fig. 1 bis 16 dargestellten ersten Ausführungsform.

Alternativ oder ergänzend zu einer elektrisch isolierenden Keramikbeschichtung 150 an dem Gehäuseunterteil 112 könnte aber auch eine elektrisch isolierende Keramikbeschichtung an der dem Gehäuseunterteil 112 zugewandten Oberseite des ersten Teil-Zwischenelements 114a vorgesehen sein.

Eine solche Keramikbeschichtung kann dabei genauso aufgebaut sein und hergestellt werden, wie dies im Zusammenhang mit der Keramikbeschichtung 162 des Zwischenelements 114 der ersten Ausführungsform vorstehend beschrieben worden ist.

Im übrigen stimmt die in den Fig. 26 und 27 dargestellte Ausführungsform eines Brennstoffzellenstapels 100 hinsichtlich Aufbau und Funktion mit den ersten drei Ausführungsformen mit einteiligem Zwischenelement überein, auf deren vorstehende Beschreibung insoweit Bezug genommen wird.

## Patentansprüche

1. Dichtungsanordnung für einen Brennstoffzellenstapel (100), der mehrere Brennstoffzelleneinheiten (102) umfasst, welche längs einer Stapelrichtung (104) aufeinander folgen, wobei jede der Brennstoffzelleneinheiten (102) ein Gehäuse (182) mit einem Gehäuseoberteil (106) und einem Gehäuseunterteil (112) aus einem metallischen Material umfasst,
**dadurch gekennzeichnet,**
**dass** die Dichtungsanordnung zusätzlich zu den Gehäuseoberteilen (106) und den Gehäuseunterteilen (112) mindestens ein Zwischenelement (114) aus einem metallischen Material umfasst, wobei das Zwischenelement (114) an mindestens einer Stelle mittels eines metallischen Lotes, das bei der Betriebstemperatur des Brennstoffzellenstapels (100) fest ist, mit einem Gehäuseteil (112) einer ersten Brennstoffzelleneinheit (102a) verlötet und an mindestens einer anderen Stelle an einem Gehäuseteil (106) einer zweiten Brennstoffzelleneinheit (102b) festgelegt ist,
wobei
a) das Zwischenelement (114) mit einer Beschichtung aus einem keramischen Material versehen und an mindestens einer mit der Keramikbeschichtung (162) versehenen Stelle mittels des metallischen Lotes mit dem Gehäuseteil (112) der ersten Brennstoffzelleneinheit (102a) verlötet ist
und/oder
b) das Gehäuseteil (112) der ersten Brennstoffzelleneinheit (102a) mit einer Beschichtung (150) aus einem keramischen Material versehen ist.

2. Dichtungsanordnung nach Anspruch 1, **dadurch gekennzeichnet, dass** das Zwischenelement (114) mit dem Gehäuseteil (106) der zweiten Brennstoffzelleneinheit (102b) verschweißt und/oder verlötet ist.

3. Dichtungsanordnung nach einem der Ansprüche 1 oder 2, **dadurch gekennzeichnet, dass** das Zwischenelement (114) einen Rahmenteil (152) umfasst, der sich ringförmig um den Brennstoffzellenstapel (100) längs der Stapelrichtung (104) durchsetzende Fluidkanäle (172, 176, 178, 180) herum erstreckt.

4. Dichtungsanordnung nach Anspruch 3, **dadurch gekennzeichnet, dass** das Zwischenelement (114) mindestens einen Kanalbegrenzungsteil (154) umfasst, der mit dem Rahmenteil (152) verbunden ist und alleine oder zusammen mit dem Rahmenteil (152) einen der den Brennstoffzellenstapel (100) durchsetzenden Fluidkanäle (174, 176) umschließt.

5. Dichtungsanordnung nach Anspruch 4, **dadurch gekennzeichnet, dass** das Zwischenelement (114) für jeden Brenngaszuführkanal (172) und jeden Brenngasabführkanal (176) jeweils einen dem betreffenden Kanal zugeordneten Kanalbegrenzungsteil (154) umfasst.

6. Dichtungsanordnung nach einem der Ansprüche 4 oder 5, **dadurch gekennzeichnet, dass** das Zwischenelement für jeden Oxidationsmittelzuführkanal und jeden Oxidationsmittelabführkanal jeweils einen Kanalbegrenzungsteil umfasst.

7. Dichtungsanordnung nach einem der Ansprüche 1 bis 6, **dadurch gekennzeichnet, dass** das Zwischenelement (114) aus einem Metallblech gebildet ist.

8. Dichtungsanordnung nach einem der Ansprüche 1 bis 7, **dadurch gekennzeichnet, dass** das Zwischenelement (114) aus einem hochkorrosionsfesten Stahl gebildet ist.

9. Dichtungsanordnung nach einem der Ansprüche 1 bis 8, **dadurch gekennzeichnet, dass** die Keramikbeschichtung (162, 150) Aluminiumoxid und/oder Titandioxid und/oder Zirkoniumdioxid und/oder Magnesiumoxid umfasst.

10. Dichtungsanordnung nach einem der Ansprüche 1 bis 9, **dadurch gekennzeichnet, dass** die Keramikbeschichtung (162, 150) durch thermisches Spritzen, insbesondere durch atmosphärisches Plasmaspritzen, durch Vakuumplasmaspritzen oder durch Flammspritzen, erzeugt ist.

11. Dichtungsanordnung nach einem der Ansprüche 1 bis 10, **dadurch gekennzeichnet, dass** das Zwischenelement (114) und/oder das Gehäuseteil (112) der ersten Brennstoffzelleneinheit (102) aus einer metallischen Legierung gebildet ist, welche einen oxidierbaren Bestandteil enthält.

12. Dichtungsanordnung nach Anspruch 11, **dadurch gekennzeichnet, dass** die metallische Legierung Aluminium und/oder Zirkonium als oxidierbaren Bestandteil enthält.

13. Dichtungsanordnung nach einem der Ansprüche 11 oder 12, **dadurch gekennzeichnet, dass** die Keramikbeschichtung (162, 150) durch Oxidation eines oxidierbaren Bestandteils der metallischen Legierung erzeugt ist.

14. Dichtungsanordnung nach einem der Ansprüche 1 bis 13, **dadurch gekennzeichnet, dass** die Keramikbeschichtung (162, 150) eine Dicke von ungefähr 20 µm bis ungefähr 1000 µm aufweist.

15. Dichtungsanordnung nach einem der Ansprüche 1 bis 14, **dadurch gekennzeichnet, dass** das Zwischenelement (114) mit dem Gehäuseteil. (112) der ersten Brennstoffzelleneinheit (102) mittels eines Silberbasislotes mit Kupferzusatz verlötet ist.

16. Dichtungsanordnung nach einem der Ansprüche 1 bis 15, **dadurch gekennzeichnet, dass** das Zwischenelement (114) mit dem Gehäuseteil (112) der ersten Brennstoffzelleneinheit (102a) mittels eines Silberbasislotes ohne Kupferzusatz verlötet ist.

17. Dichtungsanordnung nach Anspruch 16, **dadurch gekennzeichnet, dass** das Silberbasislot einen Zusatz von Kupferoxid enthält.

18. Dichtungsanordnung nach einem der Ansprüche 1 bis 17, **dadurch gekennzeichnet, dass** das Zwischenelement (114) mit dem Gehäuseteil (112) der ersten Brennstoffzelleneinheit (102) mittels eines Silberbasislotes mit Titanzusatz verlötet ist.

19. Dichtungsanordnung nach einem der Ansprüche 1 bis 18, **dadurch gekennzeichnet, dass** das Zwischenelement (114) sowohl auf einer dem Gehäuseteil (112) der ersten Brennstoffzelleneinheit (102a) zugewandten Seite als auch auf einer dem Gehäuseteil (106) der zweiten Brennstoffzelleneinheit (102b) zugewandten Seite mit einer Keramikbeschichtung (162, 162') versehen ist.

20. Dichtungsanordnung nach einem der Ansprüche 1 bis 19, **dadurch gekennzeichnet, dass** das Zwischenelement (114) an mindestens einer mit einer Keramikbeschichtung (162') versehenen Stelle mittels eines metallischen Lotes mit dem Gehäuseteil (106) der zweiten Brennstoffzelleneinheit (102b) verlötet ist.

21. Dichtungsanordnung nach einem der Ansprüche 1 bis 20, **dadurch gekennzeichnet, dass** das Zwischenelement (114) mindestens zwei separate Teil-Zwischenelemente (114a, 114b) umfasst, welche miteinander verbunden sind.

22. Dichtungsanordnung nach Anspruch 21, **dadurch gekennzeichnet, dass** mindestens zwei separate Teil-Zwischenelemente (114a, 114b) miteinander verschweißt und/oder verlötet sind.

23. Dichtungsanordnung nach einem der Ansprüche 21 oder 22, **dadurch gekennzeichnet, dass** mindestens zwei separate Teil-Zwischenelemente (114a, 114b) in der Stapelrichtung (104) des Brennstoffzellenstapels aufeinandergestapelt sind.

24. Dichtungsanordnung nach einem der Ansprüche 21 bis 23, **dadurch gekennzeichnet, dass** mindestens ein Teil-Zwischenelement (114b) an einem inneren Rand (200) und/oder an einem äußeren Rand (202) über ein benachbartes Teil-Zwischenelement (114a) übersteht.

25. Dichtungsanordnung nach einem der Ansprüche 21 bis 24, **dadurch gekennzeichnet, dass** mindestens zwei Teil-Zwischenelemente (114a, 114b) so miteinander verbunden sind, dass sich mindestens ein Bereich des einen Teil-Zwischenelements (114a) relativ zu einem Bereich des anderen Teil-Zwischenelements (114b) bewegen kann.

26. Verfahren zum Herstellen eines Brennstoffzellenstapels (100), der mehrere Brennstoffzelleneinheiten (102) umfasst, welche längs einer Stapelrichtung (104) aufeinanderfolgen, wobei jede der Brennstoffzelleneinheiten (102) ein Gehäuse (182) mit einem Gehäuseoberteil (106) und einem Gehäuseunterteil (112) aus einem metallischen Material umfasst, umfassend die folgenden Verfahrensschritte:
- Bereitstellen eines Zwischenelements (114) aus einem metallischen Material zusätzlich zu den Gehäuseoberteilen (106) und den Gehäuseunterteilen (112);
- Verlöten des Zwischenelements (114) an mindestens einer Stelle mittels eines metallischen Lotes, das bei der Betriebstemperatur des Brennstoffzellenstapels (100) fest ist, mit einem Gehäuseteil (112) einer ersten Brennstoffzelleneinheit (102a);
- Festlegen des Zwischenelements (114) an mindestens einer anderen Stelle an einem Gehäuseteil (106) einer zweiten Brennstoffzelleneinheit (102 b);
wobei
a) das Zwischenelement (114) mit einer Beschichtung aus einem keramischen Material versehen ist und an mindestens einer mit der Keramikbeschichtung (162) versehenen Stelle mittels des metallischen Lotes mit dem Gehäuseteil (112) der ersten Brennstoffzelleneinheit (102a) verlötet wird und/oder
b) das Gehäuseteil (112) der ersten Brennstoffzelleneinheit (102a) mit einer Beschichtung (150) aus einem keramischen Material versehen ist.

27. Verfahren nach Anspruch 26, **dadurch gekennzeichnet, dass** das Zwischenelement (114) mit dem Gehäuseteil (106) der zweiten Brennstoffzelleneinheit (102b) verschweißt und/oder verlötet wird.

28. Verfahren nach einem der Ansprüche 26 oder 27, **dadurch gekennzeichnet, dass** die Keramikbeschichtung (162, 150) durch thermisches Spritzen, insbesondere durch atmosphärisches Plasmaspritzen, durch Vakuumplasmaspritzen oder durch Flammspritzen, erzeugt wird.

29. Verfahren nach einem der Ansprüche 26 bis 28, **dadurch gekennzeichnet, dass** ein Zwischenelement (114) verwendet wird, dass aus einer metallischen Legierung gebildet ist, welche einen oxidierbaren Bestandteil enthält, und dass die Keramikbeschichtung (162) an dem Zwischenelement (114) durch Oxidation des oxidierbaren Bestandteils der metallischen Legierung erzeugt wird.

30. Verfahren nach einem der Ansprüche 26 bis 29, **dadurch gekennzeichnet, dass** ein Gehäuseteil (112) verwendet wird, dass aus einer metallischen Legierung gebildet ist, welche einen oxidierbaren Bestandteil enthält, und dass die Keramikbeschichtung (150) an dem Gehäuseteil (112) durch Oxidation des oxidierbaren Bestandteils der metallischen Legierung erzeugt wird.

31. Verfahren nach einem der Ansprüche 26 bis 30, **dadurch gekennzeichnet, dass** ein Zwischenelement (114) verwendet wird, das sowohl auf einer dem Gehäuseteil (112) der ersten Brennstoffzelleneinheit (102a) zugewandten Seite als auch auf einer dem Gehäuseteil (106) der zweiten Brennstoffzelleneinheit (102b) zugewandten Seite mit einer Keramikbeschichtung (162, 162') versehen ist.

32. Verfahren nach einem der Ansprüche 26 bis 31, **dadurch gekennzeichnet, dass** das Zwischenelement (114) an mindestens einer mit einer Keramikbeschichtung (162') versehenen Stelle mittels eines metallischen Lotes mit dem Gehäuseteil (106) der zweiten Brennstoffzelleneinheit (102b) verlötet wird.

## Claims

1. Sealing assembly for a fuel cell stack (100) comprising a plurality of fuel cell units (102), which are arranged consecutively in a stacking direction (104), wherein each of the fuel cell units (102) comprises a housing (182) with a housing upper part (106) and a housing lower part (112) made of a metallic material, **characterised in that** the sealing assembly comprises in addition to the housing upper parts (106) and the housing lower parts (112) at least one intermediate element (114) made of a metallic material, wherein the intermediate element (114) is soldered to a housing part (112) of a first fuel cell unit (102a) by means of a metal solder, which is solid at the operating temperature of the fuel cell stack (100), at at least one location and is secured to a housing part (106) of a second fuel cell unit (102b) at at least another location;
wherein
a) the intermediate element (114) is provided with a coating made of a ceramic material and is soldered by means of the metal solder to the housing part (112) of the first fuel cell unit (102a) at at least one location provided with the ceramic coating (162),
and/or
b) the housing part (112) of the first fuel cell unit (102a) is provided with a coating (150) made of a ceramic material.

2. Sealing assembly according to Claim 1, **characterised in that** the intermediate element (114) is welded and/or soldered to the housing part (106) of the second fuel cell unit (102b).

3. Sealing assembly according to Claim 1, or 2 , **characterised in that** the intermediate element (114) comprises a frame part (152), which extends in a ring shape around fluid ducts (172, 176, 178, 180) passing through the fuel cell stack (100) in the stacking direction (104).

4. Sealing assembly according to Claim 3, **characterised in that** the intermediate element (114) comprises at least one duct boundary part (154), which is connected to the frame part (152) and either alone or together with the frame part (152) encloses one of the fluid ducts (174, 176) passing through the fuel cell stack (100).

5. Sealing assembly according to Claim 4, **characterised in that** the intermediate element (114) respectively has a duct boundary part (154) associated with the respective duct for each fuel gas feed duct (172) and each fuel gas discharge duct (176).

6. Sealing assembly according to Claim 4 or 5, **characterised in that** the intermediate element respectively comprises a duct boundary part for each oxidising agent feed duct and each oxidising agent discharge duct.

7. Sealing assembly according to any of Claims 1 to 6, **characterised in that** the intermediate element (114) is formed from a metal sheet.

8. Sealing assembly according to any of Claims 1 to 7, **characterised in that** the intermediate element (114) is formed from a highly corrosion-resistant steel.

9. Sealing assembly according to any of Claims 1 to 8, **characterised in that** the ceramic coating (162, 150) is composed of aluminium oxide and/or titanium dioxide and/or zirconium dioxide and/or magnesium oxide.

10. Sealing assembly according to any of Claims 1 to 9, **characterised in that** the ceramic coating (162, 150) is produced by thermal spraying, in particular by atmospheric plasma spraying, by vacuum plasma spraying or by flame spraying.

11. Sealing assembly according to any of Claims 1 to 10, **characterised in that** the intermediate element (114) and/or the housing part (112) of the first fuel cell unit (102) is formed from a metal alloy, which contains an oxidisable component.

12. Sealing assembly according to Claim 11, **characterised in that** the metal alloy contains aluminium and/or zirconium as oxidisable component.

13. Sealing assembly according to Claim 11 or 12, **characterised in that** the ceramic coating (162, 150) is produced by oxidation of an oxidisable component of the metal alloy.

14. Sealing assembly according to any of claims 1 to 13, **characterised in that** the ceramic coating (162, 150) has a thickness of approximately 20 µm to approximately 1000 µm.

15. Sealing assembly according to any of Claims 1 to 14, **characterised in that** the intermediate element (114) is soldered to the housing part (112) of the first fuel cell unit (102) by means of a silver-based solder with added copper.

16. Sealing assembly according to any of Claims 1 to 15, **characterised in that** the intermediate element (114) is soldered to the housing part (112) of the first fuel cell unit (102a) by means of a silver-based solder without added copper.

17. Sealing assembly according to Claim 16, **characterised in that** the silver-based solder contains an addition of copper oxide.

18. Sealing assembly according to any of Claims 1 to 17, **characterised in that** the intermediate element (114) is soldered to the housing part (112) of the first fuel cell unit (102) by means of a silver-based solder with added titanium.

19. Sealing assembly according to any of Claims 1 to 18, **characterised in that** the intermediate element (114) is provided with a ceramic coating (162, 162') both on a side facing the housing part (112) of the first fuel cell unit (102a) and on a side facing the housing part (106) of the second fuel cell unit (102b).

20. Sealing assembly according to any of Claims 1 to 19, **characterised in that** the intermediate element (114) is soldered to the housing part (106) of the second fuel cell unit (102b) by means of a metal solder at at least one location provided with a ceramic coating (162').

21. Sealing assembly according to any of Claims 1 to 20, **characterised in that** the intermediate element (114) comprises at least two separate intermediate element parts (114a, 114b), which are connected to one another.

22. Sealing assembly according to Claim 21, **characterised in that** at least two separate intermediate element parts (114a, 114b) are welded and/or soldered to one another.

23. Sealing assembly according to Claim 21 or 22, **characterised in that** at least two separate intermediate element parts (114a, 114b) are stacked one on top of the other in the stacking direction (104) of the fuel cell stack.

24. Sealing assembly according to any of Claims 21 to 23, **characterised in that** at least one intermediate element part (114b) projects over an adjacent intermediate element part (114a) on an inside edge (200) and/or on an outside edge (202).

25. Sealing assembly according to any of Claims 21 to 24, **characterised in that** at least two intermediate element parts (114a, 114b) are connected to one another so that at least one region of one intermediate element part (114a) can move relative to a region of the other intermediate element part (114b).

26. Method for manufacturing a fuel cell stack (100) comprising a plurality of fuel cell units (102), which are arranged consecutively in a stacking direction (104), wherein each of the fuel cell units (102) comprises a housing (182) with a housing upper part (106) and a housing lower part (112) made of a metallic material, comprising the following process steps:
- provision of an intermediate element (114) made of a metallic material in addition to the housing upper parts (106) and the housing lower parts (112);
- soldering the intermediate element (114) to a housing part (112) of a first fuel cell (102a) unit at at least one location by means of a metal solder, which is solid at the operating temperature of the fuel cell stack (100);
- securing the intermediate element (114) to a housing part (106) of a second fuel cell unit (102b) at at least another location;
wherein
a) the intermediate element (114) is provided with a coating made of a ceramic material and is soldered by means of the metal solder to the housing part (112) of the first fuel cell unit (102a) at at least one location provided with the ceramic coating (162),
and/or
b) the housing part (112) of the first fuel cell unit (102a) is provided with a coating (150) made of a ceramic material.

27. Method according to Claim 26, **characterised in that** the intermediate element (14) is welded and/or soldered to the housing part (106) of the second fuel cell unit (102b).

28. Method according to Claim 26 or 27, **characterised in that** the ceramic coating (162, 150) is produced by thermal spraying, in particular by atmospheric plasma spraying, by vacuum plasma spraying or by flame spraying.

29. Method according to any of Claims 26 to 28, **characterised in that** an intermediate element (114) is used, which is formed from a metal alloy containing an oxidisable component, and the ceramic coating (162) on the intermediate element (14) is produced by oxidation of the oxidisable component of the metal alloy.

30. Method according to any of Claims 26 to 29, **characterised in that** a housing part (112) is used, which is formed from a metal alloy containing an oxidisable component, and **in that** the ceramic coating (150) on the housing part (112) is generated by oxidation of the oxidisable component of the metal alloy.

31. Method according to any of Claims 26 to 30, **characterised in that** an intermediate element (114) is used, which is provided with a ceramic coating (162, 162') both on a side facing the housing part (112) of the first fuel cell unit (102a) and on a side facing the housing part (106) of the second fuel cell unit (102b).

32. Method according to any of Claims 26 to 31, **characterised in that** the intermediate (114) element is soldered to the housing part (106) of the second fuel cell unit (102b) by means of a metal solder at at least one location provided with a ceramic coating (162').

## Revendications

1. Dispositif d'étanchéité pour un empilement de pile à combustible (100) comprenant plusieurs cellules (102) de pile à combustible successives dans une direction d'empilement (104), chaque cellule (102) de pile à combustible comportant un boîtier (182) avec une pièce supérieure (106) de boîtier et une pièce inférieure (112) de boîtier en matériau métallique,
**caractérisé en ce que**
ledit dispositif d'étanchéité comprend en complément des pièces supérieures (106) de boîtier et des pièces inférieures (112) de boîtier au moins un élément intercalaire (114) en matériau métallique, ledit élément intercalaire (114) étant brasé sur au moins un emplacement à une pièce (112) de boîtier d'une première cellule (102a) de pile à combustible, par une brasure métallique solide à température de fonctionnement de la pile à combustible (100), et sur au moins un autre emplacement à une pièce (106) de boîtier d'une deuxième cellule (102b) de pile à combustible,
a) l'élément intercalaire (114) étant pourvu d'un revêtement en matériau céramique et étant brasé par la brasure métallique à la pièce (112) de boîtier de la première cellule (102a) de pile à combustible, sur au moins un emplacement pourvu du revêtement céramique (162) et/ou
b) la pièce (112) de boîtier de la première cellule (102a) de pile à combustible étant pourvue d'un revêtement (150) en matériau céramique.

2. Dispositif d'étanchéité selon la revendication 1, **caractérisé en ce que** l'élément intercalaire (114) est soudé et/ou brasé sur la pièce (106) de boîtier de la deuxième cellule (102b) de pile à combustible.

3. Dispositif d'étanchéité selon la revendication 1 ou la revendication 2, **caractérisé en ce que** l'élément intercalaire (114) comporte une partie de cadre (152) qui s'étend en anneau tout autour de canaux de fluide (172, 176, 178, 180) traversant la pile à combustible (100) dans la direction d'empilement (104).

4. Dispositif d'étanchéité selon la revendication 3, **caractérisé en ce que** l'élément intercalaire (114) comporte au moins une partie de limitation de canal (154) raccordée à la partie de cadre (152) et entourant à elle seule ou avec la partie de cadre (152) un des canaux de fluide (174, 176) traversant la pile à combustible (100).

5. Dispositif d'étanchéité selon la revendication 4, **caractérisé en ce que** l'élément intercalaire (114) comporte pour chaque canal d'amenée de gaz combustible (172) et pour chaque canal d'évacuation de gaz combustible (176) une partie de limitation de canal (154) associée au canal correspondant.

6. Dispositif d'étanchéité selon la revendication 4 ou la revendication 5, **caractérisé en ce que** l'élément intercalaire comporte une partie de limitation de canal pour chaque canal d'amenée de fluide d'oxydation et pour chaque canal d'évacuation de fluide d'oxydation.

7. Dispositif d'étanchéité selon l'une des revendications 1 à 6, **caractérisé en ce que** l'élément intercalaire (114) est en tôle métallique.

8. Dispositif d'étanchéité selon l'une des revendications 1 à 7, **caractérisé en ce que** l'élément intercalaire (114) est en acier hautement résistant à la corrosion.

9. Dispositif d'étanchéité selon l'une des revendications 1 à 8, **caractérisé en ce que** le revêtement céramique (162, 150) contient de l'oxyde d'aluminium et/ou de l'oxyde de titane et/ou de l'oxyde de zirconium et/ou de l'oxyde de magnésium.

10. Dispositif d'étanchéité selon l'une des revendications 1 à 9, **caractérisé en ce que** le revêtement céramique (162, 150) est produit par projection thermique, en particulier par projection atmosphérique à la flamme plasma, projection plasma sous vide ou par projection à la flamme.

11. Dispositif d'étanchéité selon l'une des revendications 1 à 10, **caractérisé en ce que** l'élément intercalaire (114) et/ou la pièce (112) de boîtier de la première cellule (102) de pile à combustible est en alliage métallique contenant un composant oxydable.

12. Dispositif d'étanchéité selon la revendication 11, **caractérisé en ce que** l'alliage métallique contient de l'aluminium et/ou du zirconium en tant que composant oxydable.

13. Dispositif d'étanchéité selon la revendication 11 ou la revendication 12, **caractérisé en ce que** le revêtement céramique (162, 150) est produit par oxydation d'un composant oxydable de l'alliage métallique.

14. Dispositif d'étanchéité selon l'une des revendications 1 à 13, **caractérisé en ce que** le revêtement céramique (162, 150) a une épaisseur de 20 µm environ à 1000 µm environ.

15. Dispositif d'étanchéité selon l'une des revendications 1 à 14, **caractérisé en ce que** l'élément intercalaire (114) est brasé à la pièce (112) de boîtier de la première cellule (102) de pile à combustible par une brasure à base d'argent auquel du cuivre a été ajouté.

16. Dispositif d'étanchéité selon l'une des revendications 1 à 15, **caractérisé en ce que** l'élément intercalaire (114) est brasé à la pièce (112) de boîtier de la première cellule (102a) de pile à combustible par une brasure à base d'argent sans ajout de cuivre.

17. Dispositif d'étanchéité selon la revendication 16, **caractérisé en ce que** la brasure à base d'argent contient de l'oxyde de cuivre ajouté.

18. Dispositif d'étanchéité selon l'une des revendications 1 à 17, **caractérisé en ce que** l'élément intercalaire (114) est brasé à la pièce (112) de boîtier de la première cellule (102) de pile à combustible par une brasure à base d'argent auquel du titane a été ajouté.

19. Dispositif d'étanchéité selon l'une des revendications 1 à 18, **caractérisé en ce que** l'élément intercalaire (114) est pourvu d'un revêtement céramique (162, 162') sur une face opposée à la pièce (112) de boîtier de la première cellule (102a) de pile à combustible ainsi que sur une face opposée à la pièce (106) de boîtier de la deuxième cellule (102b) de pile à combustible.

20. Dispositif d'étanchéité selon l'une des revendications 1 à 19, **caractérisé en ce que** l'élément intercalaire (114) est brasé par une brasure métallique à la pièce (106) de boîtier de la deuxième cellule (102b) de pile à combustible, sur au moins un emplacement pourvu d'un revêtement céramique (162').

21. Dispositif d'étanchéité selon l'une des revendications 1 à 20, **caractérisé en ce que** l'élément intercalaire (114) comprend au moins deux éléments intercalaires partiels (114a, 114b) séparés, raccordés l'un à l'autre.

22. Dispositif d'étanchéité selon la revendication 21, **caractérisé en ce qu'**au moins deux éléments intercalaires partiels (114a, 114b) séparés sont soudés et/ou brasés l'un à l'autre.

23. Dispositif d'étanchéité selon la revendication 21 ou la revendication 22, **caractérisé en ce qu'**au moins deux éléments intercalaires partiels (114a, 114b) séparés sont empilés dans la direction d'empilement (104) de la pile à combustible.

24. Dispositif d'étanchéité selon l'une des revendications 21 à 23, **caractérisé en ce qu'**au moins un élément intercalaire partiel (114b) dépasse d'un élément intercalaire partiel (114a) adjacent sur un bord intérieur (200) et/ou sur un bord extérieur (202).

25. Dispositif d'étanchéité selon l'une des revendications 21 à 24, **caractérisé en ce qu'**au moins deux éléments intercalaires partiels (114a, 114b) sont raccordés l'un à l'autre de manière à permettre le déplacement d'au moins une partie du premier élément intercalaire partiel (114a) par rapport à une partie de l'autre élément intercalaire partiel (114b).

26. Procédé de fabrication d'un empilement de pile à combustible (100) comprenant plusieurs cellules (102) de pile à combustible successives dans une direction d'empilement (104), chaque cellule (102) de pile à combustible comportant un boîtier (182) avec une pièce supérieure (106) de boîtier et une pièce inférieure (112) de boîtier en matériau métallique, comprenant les étapes suivantes :
- préparation d'un élément intercalaire (114) en matériau métallique en complément des pièces supérieures (106) de boîtier et des pièces inférieures (112) de boîtier ;
- brasage de l'élément intercalaire (114) sur au moins un emplacement à une pièce (112) de boîtier d'une première cellule (102a) de pile à combustible, par une brasure métallique solide à température de fonctionnement de la pile à combustible (100) ;
- fixation de l'élément intercalaire (114) à une pièce (106) de boîtier d'une deuxième cellule (102b) de pile à combustible, sur au moins un autre emplacement ;
a) l'élément intercalaire (114) étant pourvu d'un revêtement en matériau céramique et étant brasé par la brasure métallique à la pièce (112) de boîtier de la première cellule (102a) de pile à combustible, sur au moins un emplacement pourvu du revêtement céramique (162) et/ou
b) la pièce (112) de boîtier de la première cellule (102a) de pile à combustible étant pourvue d'un revêtement (150) en matériau céramique.

27. Procédé selon la revendication 26, **caractérisé en ce que** l'élément intercalaire (114) est soudé et/ou brasé sur la pièce (106) de boîtier de la deuxième cellule (102b) de pile à combustible.

28. Procédé selon la revendication 26 ou la revendication 27, **caractérisé en ce que** le revêtement céramique (162, 150) est produit par projection thermique, en particulier par projection atmosphérique à la flamme plasma, projection plasma sous vide ou par projection à la flamme.

29. Procédé selon l'une des revendications 26 à 28, **caractérisé en ce qu'**un élément intercalaire (114) est utilisé, lequel est constitué d'un alliage métallique contenant un composant oxydable, et **en ce que** le revêtement céramique (162) sur l'élément intercalaire (114) est produit par oxydation du composant oxydable de l'alliage métallique.

30. Procédé selon l'une des revendications 26 à 29, **caractérisé en ce qu'**une pièce (112) de boîtier est utilisée, laquelle est constituée d'un alliage métallique contenant un composant oxydable, et **en ce que** le revêtement céramique (150) sur la pièce (112) est produit par oxydation du composant oxydable de l'alliage métallique.

31. Procédé selon l'une des revendications 26 à 30, **caractérisé en ce qu'**un élément intercalaire (114) est utilisé, lequel est pourvu d'un revêtement céramique (162, 162') sur une face opposée à la pièce (112) de boîtier de la première cellule (102a) de pile à combustible ainsi que sur une face opposée à la pièce (106) de boîtier de la deuxième cellule (102b) de pile à combustible.

32. Procédé selon l'une des revendications 26 à 31, **caractérisé en ce que** l'élément intercalaire (114) est brasé par une brasure métallique à la pièce (106) de boîtier de la deuxième cellule (102b) de pile à combustible sur au moins un emplacement pourvu d'un revêtement céramique (162').
